# EUROPÄISCHE PATENTSCHRIFT

(11) **EP 3 907 864 B1**
(45) Veröffentlichungstag und Bekanntmachung des Hinweises auf die Patenterteilung: **23.10.2024**
(21) Anmeldenummer: 20173421.7
(22) Anmeldetag: 07.05.2020
(51) Int. Cl.: H02K 15/00

(54) **EINRICHTUNG UND VORRICHTUNGEN SOWIE VERFAHREN ZUM RADIALEN BIEGEN VON DRAHTENDEN**
DEVICES AND METHOD FOR RADIALLY BENDING WIRE ENDS
SYSTÈME ET DISPOSITIFS AINSI QUE PROCÉDÉ DE PLIAGE RADIAL D'EXTRÉMITÉS DE FIL

(43) Veröffentlichungstag der Anmeldung: 10.11.2021
(73) Patentinhaber: Grob-Werke GmbH & Co. KG, 87719 Mindelheim (DE)
(72) Erfinder: Binder, Johannes, 87719 Mindelheim (DE); Haggenmüller, Tobias, 87647 Unterthingau (DE)
(74) Vertreter: KASTEL Patentanwälte PartG mbB

(56) Entgegenhaltungen:
- WO-A1-2019/201731
- DE-A1- 102018 103 930
- JP-A- 2014 107 877

## Beschreibung

Die Erfindung betrifft eine Radial-Biegeeinrichtung zur Verwendung bei einer Herstellung eines mit Spulen versehenen Bauteils einer elektrischen Maschine und zum Verbiegen von aus einem ringförmigen Gehäuse des Bauteils axial vorstehenden Drahtenden einer Drahtendengruppe, die wenigstens drei in radialer Richtung aufeinanderfolgend angeordnete Drahtenden aufweist, in einer radialen Richtung. Weiter betrifft die Erfindung eine Radial-Biegevorrichtung, umfassend mehrere derartiger in Umfangsrichtung beabstandete Radial-Biegeeinrichtungen. Weiter betrifft die Erfindung eine Drahtendenumformvorrichtung zur Verwendung bei einer Herstellung eines mit Spulen versehenen Bauteils einer elektrischen Maschine, zum Umformen von aus einem ringförmigen Gehäuse des Bauteils vorstehenden Drahtenden, umfassend eine solche Radial-Biegeeinrichtung oder Radial-Biegevorrichtung sowie eine Halterung für das Bauteil. Weiter betrifft die Erfindung eine Anordnung aus einer der voranstehend erläuterten Einrichtung oder Vorrichtung und dem Bauteil. Weiter betrifft die Erfindung ein RadialBiegeverfahren zur Durchführung im Zuge der Herstellung eines mit Spulen versehenen Bauteils einer elektrischen Maschine, um aus einem ringförmigen Gehäuse des Bauteils axial vorstehende Drahtenden einer Drahtendengruppe, die wenigstens drei in radialer Richtung aufeinanderfolgende angeordnete Drahtenden aufweist, in einer radialen Richtung zu verbiegen. Schließlich betrifft die Erfindung ein Computerprogrammprodukt mit Steueranweisungen zum Durchführen eines derartigen Radial-Biegeverfahrens.

Die Erfindung liegt insbesondere auf dem Gebiet der Herstellung von mit Spulen versehenen um eine Achse herum ringförmig ausgebildeten Bauteilen, wie z.B. Statoren oder Rotoren, von elektrischen Maschinen.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Maschinenelementen derartiger elektrischer Maschinen, wie beispielsweise Statoren oder Rotoren, ist es oft erforderlich, Enden von aus Drähten gebildeten Leitern miteinander zu verbinden oder sonst wie gemeinsam zu verarbeiten, wie z.B. gemeinsam zu schneiden oder zu formen.

Zum Beispiel gibt es Elektromotoren, bei denen Spulenwicklungen, insbesondere des Stators, aus unterschiedlichen Drahtstücken gebildet werden, deren Enden dann miteinander verbunden werden. Es sind bereits Vorrichtungen und Verfahren zum Verbinden von Drahtenden von Hairpins zum Bilden von Statorwicklungen von elektrischen Maschinen vorgeschlagen worden, bei denen die Drahtenden miteinander verschweißt werden. Hierbei sind Vorrichtungen und Verfahren zum Positionieren und Verspannen der Drahtenden vor dem Verschweißen vorgesehen.

Um die Drahtenden korrekt verschweißen zu können, ist es vorteilhaft, vorher die aus den einzelnen Nuten des Gehäuses des Bauteils, zum Beispiel nach dem Einfügen von Hairpins oder dergleichen, vorstehenden Drahtenden zunächst umzuformen, insbesondere zu weiten und zu verschränken, z.B. um so miteinander zu verbindende Drahtendenpaare zu bilden.

Die Erfindung befasst sich mit Einrichtungen, Vorrichtungen und Verfahren zum Umformen der Drahtenden in eine Radialrichtung zu der Achse des Bauteils. Dieses Umformen wird auch als Weiten bezeichnet. Das Weiten dient insbesondere zur Vorbereitung weiterer Umformschritte, wie z. B. einem Umformen in Umfangsrichtung, dem sogenannten Schränken. Zum Beispiel werden bei der Herstellung von Hairpin-Statoren die Drahtenden (im Folgenden auch Pinenden oder Pins, abgeleitet von Hairpin, genannt) beim Weitprozess in radialer Richtung umgeformt. Bei diesem Umformprozess werden die Pinenden voneinander separiert, um sie für einen nachfolgenden Schränkprozess vorzubereiten.

Zum technologischen Hintergrund und zum Stand der Technik wird insbesondere auf folgende Literaturstellen hingewiesen:
[1] DE 10 2018 103 930 A1
[2] DE 10 2018 206 003 A1
[3] JP 5 904 103 A

Bei den Vorrichtungen und Verfahren nach [2] erfolgt das Weiten durch axiale Zustellung eines keilförmigen Elements. Bei [3] sind Hülsen zur Positionierung vorgesehen. Nachteile dieser Vorrichtungen und Verfahren liegen in der mangelnden Flexibilität. Alle Drahtenden, die sich auf einem Ring mit gleichem Radius befinden, werden gleich behandelt und gleich umgeformt. Sollen einzelne Drahtenden anders bearbeitet werden, wie z. B. Drahtenden für eine gesonderte Verschaltung, auch Sonderpins genannt, so ist ein zusätzlicher Bearbeitungsschritt notwendig.

Als nächstliegender Stand der Technik wird die Literaturstelle [1] angesehen, bei der das Weiten mittels Greifer erfolgt und die Merkmale des Oberbegriffs des Anspruchs 1 offenbart.

Bei internen Versuchen hat sich gezeigt, dass ein sicheres Erfassen der Drahtenden durch Greifer dann erfolgen kann, wenn diese gegen einen Gegenhalter arbeiten, um so die Drahtenden innerhalb des Greifers korrekt zu positionieren. Dadurch ist allerdings eine Flexibilität des Umformens nur in einer Richtung möglich.

Die Erfindung hat sich zur Aufgabe gestellt, Einrichtungen, Vorrichtungen und Verfahren zum radialen Umformen von Drahtenden der aus [1] bekannten Art dahingehend zu verbessern, dass ein exaktes Erfassen der Drahtenden bei größerer Flexibilität in der Umformung erreicht wird.

Zum Lösen dieser Aufgabe schafft die Erfindung eine Radial-Biegeeinrichtung nach Anspruch 1, sowie eine Radial-Biegevorrichtung, eine Drahtendenumformvorrichtung, eine Anordnung, ein Radialbiegeverfahren und ein Computerprogrammprodukt nach den Nebenansprüchen.

Vorteilhafte Ausgestaltungen sind Gegenstand der Unteransprüche.

Die Erfindung schafft gemäß einem ersten Aspekt davon eine Radial-Biegeeinrichtung zur Verwendung bei einer Herstellung eines mit Spulen versehenen Bauteils einer elektrischen Maschine und zum Verbiegen von aus einem ringförmigen Gehäuse des Bauteils axial vorstehenden Drahtenden einer Drahtendengruppe, die wenigstens drei in radialer Richtung aufeinanderfolgend angeordnete Drahtenden aufweist, in einer radialen Richtung, umfassend:
einen radial beweglichen Greifer, der zum Ergreifen wenigstens eines der Drahtenden und zum Verbiegen des wenigstens einen Drahtendes in die radiale Richtung ausgebildet ist und eine erste in eine erste radiale Richtung weisende Anlagefläche für wenigstens ein Drahtende und eine zweite, in die entgegengesetzte zweite radiale Richtung weisende Anlagefläche für wenigstens ein Drahtende aufweist, und
ein sich länglich oder flächig mit einer ersten Seite und einer zweiten Seite in Umfangsrichtung erstreckendes Gegenlagerelement zum axialen Einfügen zwischen zwei radial benachbarten Drahtenden der Drahtendengruppe, um die Drahtendengruppe in mehrere Teile aufzuteilen,
wobei in einem ersten radialen Bewegungsbereich des Greifers die erste Seite des Gegenlagerelements als Gegenlager für die erste Anlagefläche ausgebildet ist, um wenigstens ein auf der ersten Seite befindliches Drahtende eines ersten Teils der Drahtendengruppe zwischen dem Gegenlagerelement und der ersten Anlagefläche einzufassen, und in einem zweiten radialen Bewegungsbereich des Greifers die zweite Seite des Gegenlagerelements als Gegenlager für die zweite Anlagefläche ausgebildet ist, um wenigstens ein auf der zweiten Seite befindliches Drahtende eines zweiten Teils der Drahtendengruppe zwischen dem Gegenlagerelement und der zweiten Anlagefläche einzufassen.

Es ist bevorzugt, dass der Greifer einen ersten Aufnahmeraum für das wenigstens eine Drahtende des ersten Teils der Drahtendengruppe hat, wobei der erste Aufnahmeraum durch die erste Anlagefläche begrenzt ist, und einen radial zu dem ersten Aufnahmeraum beabstandeten zweiten Aufnahmeraum für das wenigstens eine Drahtende des zweiten Teils der Drahtendengruppe hat, wobei der zweite Aufnahmeraum durch die zweite Anlagefläche begrenzt ist.

Es ist bevorzugt, dass der Greifer mit einer ersten und einer zweiten Greiferbacke versehen ist, die relativ zueinander bewegbar sind und von denen wenigstens eine Greifbacke wenigstens einen auf die andere Greifbacke zu vorspringenden Vorsprung aufweist, an dem wenigstens ein Teilbereich wenigstens einer der Anlageflächen ausgebildet ist.

Es ist bevorzugt, dass die Aufnahmeräume an den in Umfangsrichtung gerichteten Seiten durch sich radial erstreckende Klemmflächen der Greiferbacken und/oder an den der jeweiligen Anlagefläche gegenüberliegenden Seite durch wenigstens einen Zahnvorsprung, der kleiner als der Vorsprung vorsteht, begrenzt ist.

Es ist bevorzugt, dass die erste Anlagefläche und die zweite Anlagefläche axial beabstandet zueinander sind.

Es ist bevorzugt, dass die erste Anlagefläche an einem ersten Vorsprung, der von wenigstens einer Greiferbacke des Greifers vorsteht, ausgebildet ist und die zweite Anlagefläche an einem zweiten Vorsprung, der von der wenigstens einen Greiferbacke des Greifers vorsteht, ausgebildet ist, vorzugsweise derart, dass der erste und der zweite Vorsprung radial und/oder axial beabstandet zueinander sind.

Es ist bevorzugt, dass das Gegenlagerelement als Teil oder Segment einer sich in Umfangsrichtung erstreckenden Hülse ausgebildet ist.

Es ist bevorzugt, dass das Gegenlagerelement als Blechwandung ausgebildet ist.

Es ist bevorzugt, dass das Gegenlagerelement wenigstens eine Aussparung zum Durchführen von freien Enden von Greiferbacken des Greifers aufweist.

Vorzugsweise ist der wenigstens eine Greifer in Umfangsrichtung relativ zu dem Bauteil beweglich. Insbesondere ist der Greifer von einer ersten Nut des Bauteils, aus der eine erste Drahtendengruppe vorsteht, zu einer zweiten Nut des Bauteils bewegbar, aus der eine zweite Drahtendengruppe vorsteht. Insbesondere kann der Greifer von Nut zu Nut rotiert werden.

Gemäß einem weiteren Aspekt schafft die Erfindung eine Radial-Biegevorrichtung, umfassend mehrere in Umfangsrichtung beabstandete Radial-Biegeeinrichtungen nach einer der voranstehenden Ausgestaltungen, um mehrere in Umfangsrichtung beabstandete Drahtendengruppen gleichzeitig zu bearbeiten.

Bei einer bevorzugten Ausgestaltung ist die Radial-Biegevorrichtung insgesamt relativ zu dem Bauteil in Umfangsrichtung bewegbar, insbesondere drehbar, um jeden Greifer von einer jeweils durch den Greifer bereits bearbeiteten Drahtendengruppe zu einer anderen durch den Greifer noch zu bearbeitenden Drahtendengruppe zu bewegen.

Gemäß einem weiteren Aspekt schafft die Erfindung eine Drahtendenumformvorrichtung zur Verwendung bei einer Herstellung eines mit Spulen versehenen Bauteils einer elektrischen Maschine, zum Umformen von aus einem ringförmigen Gehäuse des Bauteils vorstehenden Drahtenden, umfassend eine Radial-Biegeeinrichtung nach einer der voranstehenden Ausgestaltungen oder eine Radial-Biegevorrichtung nach einer der voranstehenden Ausgestaltungen und eine Halterung für das Bauteil, die relativ zu der Radial-Biegeeinrichtung bzw. Radial-Biegevorrichtung axial beweglich und relativ zu der Radial-Biegeeinrichtung bzw. Radial-Biegevorrichtung um eine zentrale Achse drehbar ist.

Die relative Drehung zwischen der Halterung und der Radial-Biegeeinrichtung oder -vorrichtung kann durch Drehen der Halterung bei stationärer Radial-Biegeeinrichtung oder -vorrichtung erfolgen, oder es erfolgt, bevorzugt, eine Drehung der Radial-Biegeeinrichtung oder -vorrichtung bei nicht-drehbarem Halter, wobei der Halter insbesondere an einer Axialbewegungseinrichtung zum Durchführen der axialen Bewegung vorgesehen ist.

Eine bevorzugte Ausgestaltung der Drahtendenumformvorrichtung umfasst eine Steuerung, die dazu ausgebildet ist, die Drahtendenumformvorrichtung anzusteuern zum
a) axialen Einfügen des Gegenlagerelements zwischen zwei radial benachbarte Drahtenden der Drahtendengruppe, um die Drahtendengruppe in mehrere Teile aufzuteilen;
b) Einfassen und Ausrichten wenigstens eines Drahtendes eines ersten Teils der Drahtendengruppe zwischen der einen Seite des Gegenlagerelements und der ersten Anlagefläche durch eine entsprechende radiale Bewegung des Greifers mit sich in einer Mittelstellung befindlichen Greiferbacken;
c) Klemmen des wenigstens einen Drahtendes des ersten Teils der Drahtendengruppe in dem ersten Aufnahmeraum durch Bewegen der Greiferbacken in eine Klemmstellung,
d) radialen Bewegen des Greifers, um das in dem ersten Aufnahmeraum aufgenommene wenigstens eine Drahtende des ersten Teils der Drahtendengruppe radial zu verbiegen;
e) radialen Bewegen des Greifers mit Greiferbacken in einer Lösestellung zu der anderen Seite des Gegenlagerelements;
f) Einfassen und Ausrichten wenigstens eines Drahtendes eines zweiten Teils der Drahtendengruppe zwischen der anderen Seite des Gegenlagerelements und der zweiten Anlagefläche des Greifers mit sich in der Mittelstellung befindlichen Greiferbacken;
g) Klemmen des wenigstens einen Drahtendes des zweiten Teils der Drahtendengruppe in dem zweiten Aufnahmeraum durch Bewegen der Greiferbacken in die Klemmstellung, und
h) radialen Bewegen des Greifers, um das in dem zweiten Aufnahmeraum aufgenommene wenigstens eine Drahtende radial zu verbiegen.

Gemäß einem weiteren Aspekt schafft die Erfindung eine Anordnung, umfassend eine Einrichtung oder Vorrichtung nach einer der voranstehenden Ausgestaltungen und das Bauteil.

Gemäß einem weiteren Aspekt schafft die Erfindung ein Radial-Biegeverfahren zur Durchführung im Zuge der Herstellung eines mit Spulen versehenen Bauteils einer elektrischen Maschine, um aus einem ringförmigen Gehäuse des Bauteils axial vorstehende Drahtenden einer Drahtendengruppe, die wenigstens drei in radialer Richtung aufeinanderfolgende angeordnete Drahtenden aufweist, in einer radialen Richtung zu verbiegen, umfassend:
a) axiales Einfügen eines sich länglich oder flächig in Umfangsrichtung erstreckenden Gegenlagerelements zwischen zwei radial benachbarten Drahtenden der Drahtendengruppe, um die Drahtendengruppe in mehrere Teile aufzuteilen;
b) Einfassen und Ausrichten wenigstens eines Drahtendes eines ersten Teils der Drahtendengruppe zwischen einer Seite des Gegenlagerelements und einer ersten in die eine radiale Richtung gerichteten Anlagefläche eines Greifers durch eine entsprechende radiale Bewegung des Greifers mit sich in einer Mittelstellung befindlichen Greiferbacken;
c) Klemmen des wenigstens einen Drahtendes des ersten Teils der Drahtendengruppe in einem durch die erste Anlagefläche begrenzten ersten Aufnahmeraum durch Bewegen der Greiferbacken in eine Klemmstellung,
d) radiales Bewegen des Greifers, um das in dem ersten Aufnahmeraum aufgenommene wenigstens eine Drahtende des ersten Teils der Drahtendengruppe radial zu verbiegen;
e) radiales Bewegen des Greifers mit Greiferbacken in einer Lösestellung zu der anderen Seite des Gegenlagerelements;
f) Einfassen und Ausrichten wenigstens eines Drahtendes eines zweiten Teils der Drahtendengruppe zwischen der anderen Seite des Gegenlagerelements und einer zweiten in die andere radiale Richtung gerichteten Anlagefläche des Greifers mit sich in der Mittelstellung befindlichen Greiferbacken;
g) Klemmen des wenigstens einen Drahtendes des zweiten Teils der Drahtendengruppe in einem durch die zweite Anlagefläche begrenzten zweiten Aufnahmeraum durch Bewegen der Greiferbacken in die Klemmstellung,
h) radiales Bewegen des Greifers, um das in dem zweiten Aufnahmeraum aufgenommene wenigstens eine Drahtende radial zu verbiegen.

Es ist bevorzugt, dass die Schritte b) bis d) vor Durchführen des Schritts e) zum Verbiegen anderer Drahtenden des ersten Teils der Drahtendengruppe wiederholt werden.

Es ist bevorzugt, dass die Schritte f) bis h) zum Verbiegen anderer Drahtenden des zweiten Teils der Drahtendengruppe wiederholt werden.

Es ist bevorzugt, dass das Verfahren, zumindest mit den Schritten b) bis h), an anderen Drahtendengruppen des Bauteils wiederholt wird, bis alle vorstehenden Drahtenden entsprechend radial umgeformt sind.

Es ist bevorzugt, dass freie Enden der Greiferbacken radial nach innen weisen und das radiale Bewegen in Schritt d) radial auswärts erfolgt und das radiale Bewegen in Schritt h) radial einwärts.

Gemäß einem weiteren Aspekt schafft die Erfindung ein Computerprogrammprodukt, umfassend maschinenlesbare Steueranweisungen, die, wenn in eine Steuerung einer Radial-Biegeeinrichtung, einer Radial-Biegevorrichtung oder einer Drahtendenumformvorrichtung nach einer der voranstehenden Ausgestaltungen geladen, die Radial-Biegeeinrichtung bzw. die Radial-Biegevorrichtung bzw. die Drahtendenumformvorrichtung veranlassen, das Radial-Biegeverfahren nach einer der voranstehenden Ausgestaltungen durchzuführen.

Bevorzugte Ausgestaltungen der Erfindung betreffen eine Vorrichtung zum radialen Umformen einer Hairpinwicklung, insbesondere eines Stators einer elektrischen Maschine. Die elektrische Maschine ist vorzugsweise ein Elektromotor, der als Fahrantrieb für ein Elektrokraftfahrzeug einzusetzen ist und weiter bevorzugt, eine Nenn-Leistung im Bereich von 20kW bis 400kW aufweist. Bei derartigen elektrischen Maschinen ist ein hoher Füllgrad des Stators mit Spulenwicklungen bevorzugt. Hierzu werden die Spulen bevorzugt aus unrunden Drähten, insbesondere Rechteckdrähten, gebildet, die in Nuten des Statorblechpakets (Beispiel für ein ringförmiges Gehäuse) eingesetzt sind. Dies erfolgt vorzugsweise durch Herstellung aus Hairpins, wie dies in [1] ausführlich erläutert und gezeigt ist.

Bevorzugte Ausführungsformen der Erfindung zeichnen sich durch die Verwendung eines Greifers mit Greifbacke aus, welche mehrere, beispielsweise zwei, Greifbereiche aufweist. Insbesondere sind die Greifbereiche gespiegelt ausgebildet. Bei bevorzugten Ausgestaltungen sind die Greifbereiche mit unterschiedlichen Anschlagflächen zum Zusammenwirken mit wenigstens einem Gegenhalterelement in unterschiedlichen Richtungen vorgesehen. Dadurch kann das jeweiligen Drahtende zwischen Gegenhalterbereich und Anschlagfläche exakt in dem Greifbereich positioniert werden. Der eine Greifbereich kann zum Umformen in die eine Richtung verwendet werden und der anderen Greifbereich zum Umformen in die andere Richtung. Der Grad der Umformung kann durch entsprechende Einstellung des radialen Bewegungsweges des Greifers flexibel eingestellt werden.

Gegenüber dem Stand der Technik können die Hairpin-Enden flexibel bearbeitet werden. Ein selektives Umformen der Pins radial nach innen ist genauso möglich wie ein Umformen der Pins nach außen. Hierfür ist kein nachgeschalteter Prozess erforderlich.

Ein Ausführungsbeispiel der Erfindung wird im Folgenden anhand der beigefügten Zeichnungen näher erläutert. Darin zeigt:
- Fig. 1: eine schematische Ansicht einer Anordnung aus einem Bauteil mit einem ringförmigen Gehäuse, aus dem in Drahtendengruppen gruppierte Drahtenden hervorstehen und einer mit ihrer zentralen Achse zu der Achse des Gehäuses ausgerichteten Drahtendenumformvorrichtung, die eine Halterung für das Bauteil und eine Radial-Biegevorrichtung aufweist;
- Fig. 2: eine perspektivische Ansicht einer bevorzugten Ausführungsform einer Radial-Biegevorrichtung, die mehrere in Umfangsrichtung um eine zentrale Achse beabstandet angeordnete Radial-Biegeeinrichtungen aufweist;
- Fig. 3: eine vergrößerte Teildarstellung von Fig. 2, die eine erste der Radial-Biegeeinrichtungen vergrößert zeigt;
- Fig. 4: eine schematische Ansicht eines Beispiels für das zu bearbeitende Bauteil am Beispiel einer Vorstufe für einen Stator einer elektrischen Maschine, wobei das Bauteil ein ringförmiges Gehäuse mit mehreren Nuten aufweist, wobei aus jeder Nut Drahtenden einer Drahtendengruppe vorstehen;
- Fig. 5: ein Schnitt durch eine Drahtendengruppe mit einer idealen Ausrichtung der Drahtenden;
- Fig. 6: ein Schnitt durch eine weitere Drahtendengruppe mit einer abweichenden Ausrichtung der Drahtenden;
- Fig. 7: eine Draufsicht auf einen Greifer einer der Radial-Biegeeinrichtungen in einer Lösestellung;
- Fig. 8: eine Draufsicht auf den Greifer von Fig. 7 in einer Mittelstellung mit einem zu erfassenden Drahtende;
- Fig. 9: eine Draufsicht auf den Greifer von Fig. 8 in einer Klemmstellung;
- Fig. 10: eine Draufsicht auf einen ersten Greifbereich des Greifers mit einem ersten Aufnahmeraum in der Lösestellung;
- Fig. 11: eine Draufsicht auf den ersten Greifbereich des Greifers von Fig. 10 in einer Mittelstellung zusammen mit einem Drahtende;
- Fig. 12: eine Draufsicht wie in Fig. 11 mit dem Greifer in der Klemmstellung;
- Fig. 13: eine perspektivische Ansicht einer Ausführungsform des Greifers;
- Fig. 14: eine Draufsicht auf den Greifer von Fig. 13 mit dem Gegenlagerelement;
- Fig. 15: eine perspektivische Ansicht des Greifers und des Gegenlagerelements von Fig. 14;
- Fig. 16: eine perspektivische Ansicht des Gegenlagerelements;
- Fig. 17: eine Draufsicht auf eine Gegenlagerelementanordnung mit den mehreren Gegenlagerelementen der mehreren Radial-Biegeeinrichtungen der Radial-Biegevorrichtung, wobei auch ein Greifer einer der Radial-Biegeeinrichtungen gezeigt ist;
- Fig. 18: die Anordnung von Fig. 17 in perspektivischer Ansicht;
- Fig. 19: eine Seitenansicht auf die Gegenlagerelementanordnung;
- Fig. 20: eine Ansicht wie in Fig. 17, wobei eine gerade zu bearbeitende Drahtendengruppe mit je vier Drahtenden und jeweils benachbarten Drahtendengruppen dargestellt ist;
- Fig. 21: eine Ansicht wie in Fig. 15, wobei eine gerade zu bearbeitende Drahtendengruppe mit je vier Drahtenden und jeweils benachbarten Drahtendengruppen dargestellt ist;
- Fig. 22: eine Draufsicht auf den ersten Greifbereich des Greifers in der Mittelstellung bei einem Schritt eines Radial-Biegeverfahrens zum Biegen der Drahtenden einer Drahtendengruppe, wobei in diesem Schritt Drahtenden eines radial äußeren Teils der Drahtendengruppe positioniert werden;
- Fig. 23: eine Draufsicht auf den ersten Greifbereich des Greifers in der Klemmstellung bei einem weiteren Schritt des Radial-Biegeverfahrens, bei dem ein Drahtende des radial äußeren Teils der Drahtendengruppe radial nach außen gebogen wird;
- Fig. 24: eine Draufsicht auf den Greifer in der Lösestellung bei einem weiteren Schritt des Radial-Biegeverfahrens, in dem der Greifer dem radial inneren Teil der Drahtendengruppe zugestellt wird;
- Fig. 25: eine Draufsicht auf den Greifer in der Mittelstellung bei einem Schritt des Positionierens der Drahtenden eines radial inneren Teils der Drahtendengruppe; und
- Fig. 26: eine Draufsicht auf den Greifer in der Klemmstellung bei einem Schritt des Radial-Biegeverfahrens, bei dem ein Drahtende des radial inneren Teils der Drahtendengruppe radial nach innen gebogen wird.

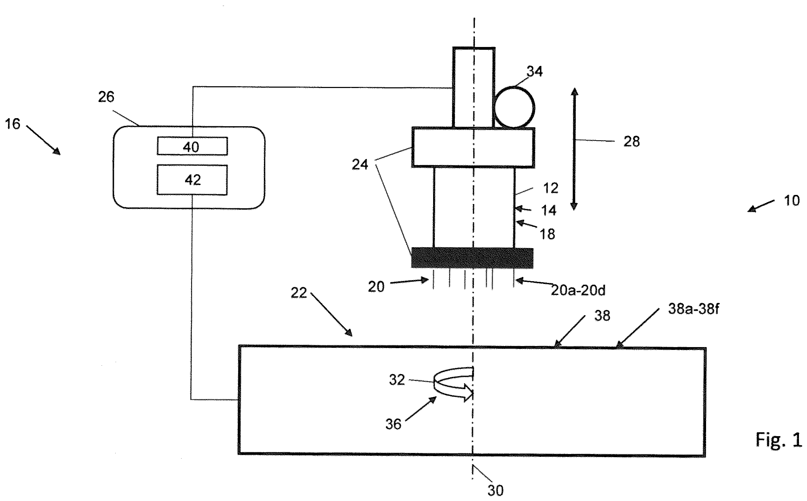

In Fig. 1 ist eine Anordnung 10 aus einem ringförmigen Gehäuse 12 für ein Bauteil 14 für eine elektrische Maschine und einer Drahtendenumformvorrichtung 16 im Verlauf der Herstellung des Bauteils 14 dargestellt.

Das Bauteil 14 soll bei der Herstellung mit Spulen versehen werden. Beispiele für derartige Bauteile 14 sind Rotoren oder Statoren einer elektrischen Maschine. Bei den dargestellten Ausführungsbeispielen handelt es sich bei dem Bauteil 14 um einen Stator 18 für einen Elektromotor eines Elektrokraftfahrzeuges.

Die Drahtendenumformvorrichtung 16 dient zum Umformen von aus dem ringförmigen Gehäuse 12 vorstehenden Drahtenden 20, 20a - 20d.

Die Drahtendenumformvorrichtung 16 weist eine Radial-Biegevorrichtung 22, eine Halterung 24 und eine Steuerung 26 auf.

Die Halterung 24 dient zum Halten des ringförmigen Gehäuses 12. Die Drahtendenumformvorrichtung 16 ist so ausgebildet, dass das ringförmige Gehäuse 12 relativ zu der Radial-Biegevorrichtung 22 in axialer Richtung bewegbar ist, wie dies durch den Pfeil 28 angedeutet ist und um eine zentrale Achse 30 der Radial-Biegevorrichtung 22, die konzentrisch zu dem ringförmigen Gehäuse 12 anzuordnen ist, relativ drehbar ist, wie dies durch den Pfeil 32 angedeutet ist.

Bei dem dargestellten Ausführungsbeispiel ist die Halterung 24 mittels eines Axialbewegungsaktors 34 bewegbar angeordnet, und die Radial-Biegevorrichtung weist einen Drehantrieb 36 zum Drehen von Radial-Biegeeinrichtungen 38 um die zentrale Achse 30 auf.

Die Steuerung 26 weist eine Halterungssteuerung 40 und eine Radial-Biegesteuerung 42 auf. Mittels der Halterungssteuerung 40 wird der Axialbewegungsaktor 34 gesteuert. Die Radial-Biegesteuerung 42 steuert den Drehantrieb 36 sowie weitere hiernach noch näher erläuterte Aktoren der Radial-Biegevorrichtung 22 sowie deren Radial-Biegeeinrichtungen 38, 38a - 38f.

Der Halter 24 ist in Fig. 1 nur schematisch dargestellt. Für weitere Einzelheiten zu möglichen Ausführungsformen wird auf [1] verweisen.

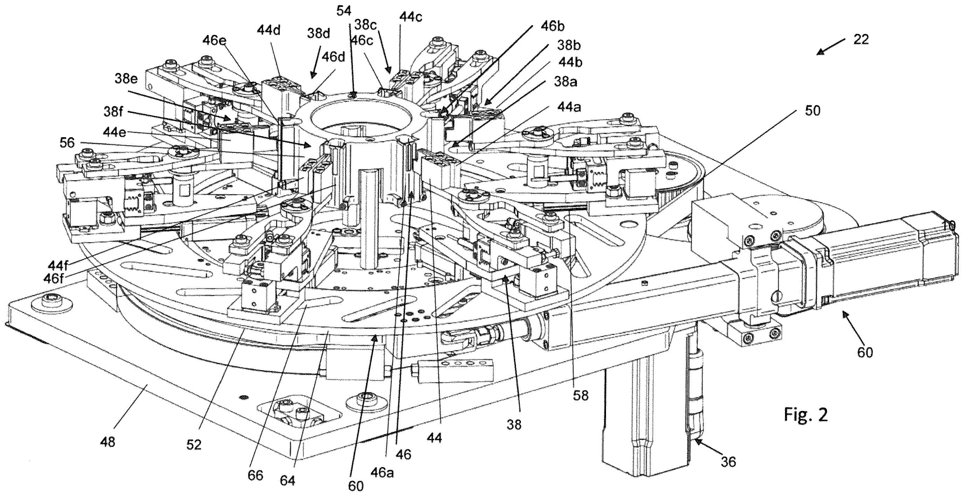

Fig. 2 zeigt ein Ausführungsbeispiel für die Radial-Biegevorrichtung 22. Die Radial-Biegevorrichtung 22 weist mehrere, hier z. B. sechs, Radial-Biegeeinrichtungen 38, 38a - 38f zum Verbiegen der Drahtenden 20, 20a - 20d in eine relativ zu der zentralen Achse 30 radialen Richtung auf.

Jede Radial-Biegeeinrichtung 38, 38a - 38f weist wenigstens einen Greifer 44, 44a - 44f zum Ergreifen wenigstens eines der Drahtenden 20, 20a - 20d und zum Verbiegen des wenigstens einen Drahtendes in die radiale Richtung sowie wenigstens ein Gegenlagerelement 46, 46a - 46f auf.

Wie in Fig. 2 dargestellt, weist die Radial-Biegevorrichtung 22 eine Grundplatte 48 auf, die beispielsweise an einen Maschinenbett (nicht dargestellt) befestigt sein kann. An der Grundplatte ist der Drehantrieb 36 befestigt, der in der dargestellten Ausführungsform mittels eines Zahnriementriebs 50 eine Drehbasis 52 antreibt, die auf der Grundplatte 48 um die zentrale Achse 30 herum drehbar gelagert ist. Mittels des Drehantriebes 36 lassen sich die einzelnen Greifer 44a - 44f auf die passende Winkelstellung relativ zu dem ringförmigen Gehäuse 12 einstellen, um die jeweils zu bearbeitende Drahtendengruppe 94 zu bearbeiten.

Auf der Drehbasis 52 ist eine Gegenlagerelementanordnung 54 befestigt, die die Gegenlagerelemente 46, 46a - 46f der Radial-Biegeeinrichtungen 38, 38a - 38f aufweist. Bei einer nicht dargestellten Ausführungsform ist die Gegenlagerelementanordnung 54 durch eine ringförmige Hülse gebildet, wobei die einzelnen Gegenlagerelemente 46a - 46f als Segmentabschnitte dieser Hülse ausgebildet sind. Bei der dargestellten Ausführungsform weist die Gegenlagerelementanordnung 54 einen Grundkörper 56 auf, an dem als einzelne Hülsensegmente ausgebildete Gegenlagerelemente 46a - 46f über den Umfang verteilt befestigt sind.

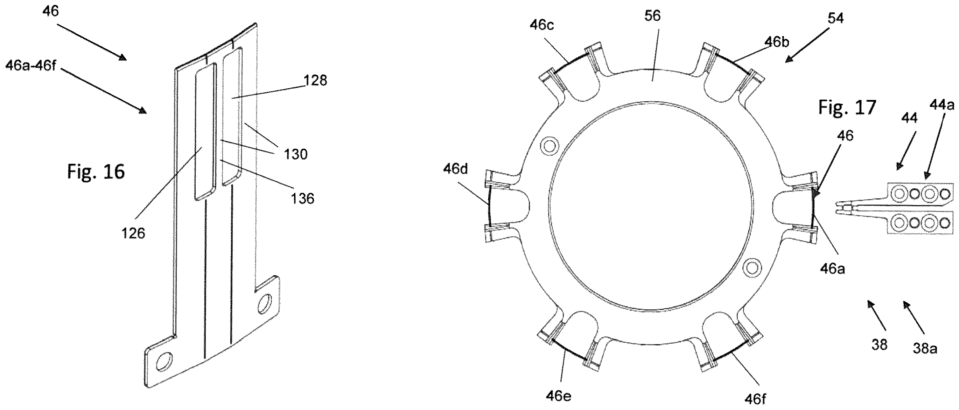

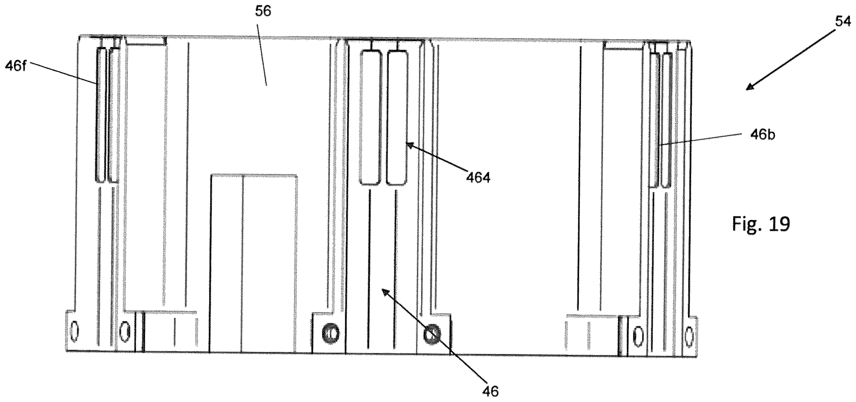

Ein einzelnes Gegenlagerelement ist in Fig. 16 dargestellt; und die Gegenlagerelementanordnung 54 ist einzeln oder mit Greifer in den Fig. 17 - 19 und 21 dargestellt. Wie in Fig. 2 gezeigt sind weiter auf der Drehbasis 52 Führungen 58 für die Radialbewegung der Greifer 44a - 44f vorgesehen. Die Radialbewegung der Greifer 44a - 44f wird durch einen Radialantrieb 60 angetrieben. Bei nicht dargestellten Ausführungsformen weist jede Radial-Biegeeinrichtung 38a - 38f einen eigens ansteuerbaren Radialantrieb 60 auf. Bei der dargestellten Ausführungsform weist der Radialantrieb 60 eine relativ zu der Drehbasis 52 mittels eines Radialantriebsaktors 62 relativ drehend angetriebene Ringplatte 64 oder dergleichen mit Kurvenführungen 66 auf. Durch eine Relativverdrehung der Ringplatte 64 und der Drehbasis 52 werden über die Kurvenführungen 66 die Greifer 44a - 44f gemeinsam in Radialrichtung bewegend angetrieben. Der Hub und die Richtung des Radialantriebs 60 wird über die Steuerung 26, 42 so gesteuert, dass das im Folgenden noch näher erläuterte Radial-Biegeverfahren durchgeführt wird.

Wie in Fig. 2 dargestellt, sind die erste bis sechste Radial-Biegeeinrichtung 38, 38a - 38f identisch ausgeführt und über den Umfang um die zentrale Achse 30 verteilt angeordnet.

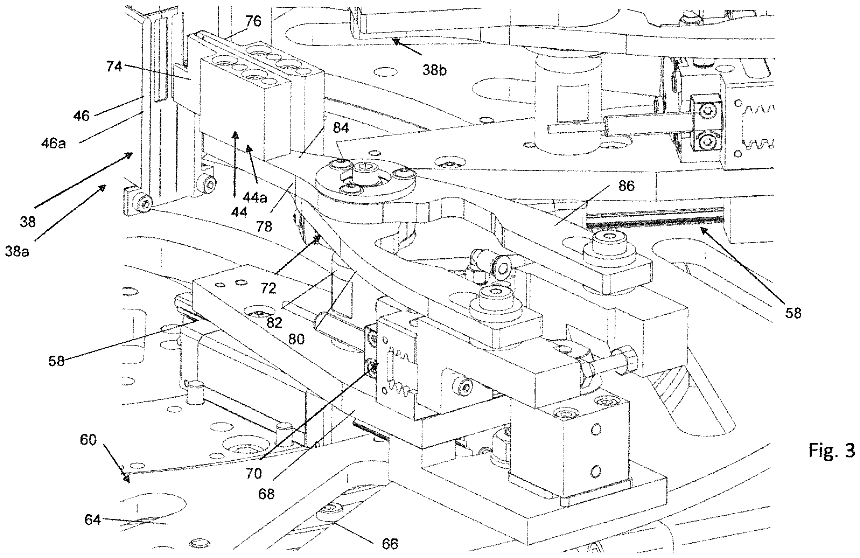

Der Aufbau jeder Radial-Biegeeinrichtung 38, 38a - 38f wird im Folgenden am Beispiel der ersten Radial-Biegeeinrichtung 38a erläutert, die vergrößert in Fig. 3 dargestellt ist. Der Aufbau der übrigen Radial-Biegeeinrichtungen 38b - 38f ist entsprechend analog.

Wie in Fig. 3 gezeigt, weist die Radial-Biegeeinrichtung 38, 38a eine an der Führung 58 in radialer Richtung verschiebbare Greiferbasis 68, einen auf der Greiferbasis 68 befestigten Greiferantrieb 70, der ebenfalls durch die Radial-Biegesteuerung 42 ansteuerbar ist, eine Greiferbackenführung 72 sowie den Greifer 44 mit einer ersten Greiferbacke 74 und einer zweiten Greiferbacke 76 auf. Die Greiferbacken 74, 76 sind mittels der Greiferbackenführung 72 aufeinander zu und von einander weg bewegbar. Die Greiferbackenführung 72 wird entsprechend durch den Greiferantrieb 70 angetrieben. Der Aufbau des Greiferantriebs 70 und der Greiferbackenführung 72 kann unterschiedlich sein. Vorzugsweise ist der Aufbau so, dass die Greiferbacken 74, 76 beide bewegbar sind und von beiden Seiten auf das jeweils zu erfassende Drahtende 20, 20a - 20d zu bewegt und von diesem weg bewegt werden können.

Bei dem dargestellten Ausführungsbeispiel ist die Greiferbackenführung 72 hierzu zangenartig ausgeführt mit einem ersten Greiferbackenhebel 78, einem zweiten Greiferbackenhebel 80 und einer Greiferbackenhebellagerung 82. Die Greiferbackenhebel 78, 80 weisen einen nach radial inneren Hebelarm 84 mit der jeweiligen Greiferbacke 74, 76 und einen radial äußeren Hebelarm 86 auf, an dem der Greiferantrieb 70 angreift. Selbstverständlich wäre auch an Stelle der dargestellten Konstruktion mit jeweiligen zweiarmigen Greiferbackenhebel 78, 80 auch eine Konstruktion mit einarmigen Greiferbackenhebeln 78, 80 denkbar.

Durch den Radialantrieb 60 ist der Greifer 44 mit den Greiferbacken 74, 76 auf das auf der Drehbasis 52 feststehende Gegenlagerelement 46 zu und wegbewegbar.

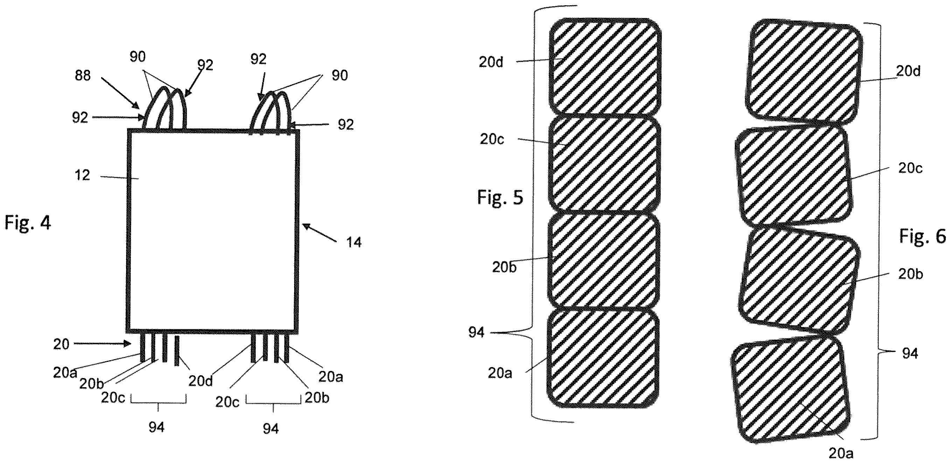

Die genauere Ausbildung des Greifers 44, 44a - 44f und die Funktion und Arbeitsweise der jeweiligen Radial-Biegeeinrichtung 38, 38a - 38f werden im Folgenden anhand der Fig. 4 - 21 näher erläutert.

Fig. 4 zeigt schematisch das ringförmige Gehäuse 12 zum Aufbau des Bauteils 14. Das Gehäuse 12 ist beispielsweise ein Blechpaket eines Stators 18 und ist mit einer Reihe von über dem Umfang verteilten Nuten (hier nicht näher dargestellt) ausgebildet, wie dies genauer aus der Literaturstelle [1] entnehmbar ist. Zum Bilden der Spulenwicklung 88 wird in diese Nuten ein Kranz aus Hairpins 90 eingefügt. Fig. 4 zeigt oben die etwa U-förmigen Wicklungsköpfe 92 der Hairpins 90 und unten die freien Enden der Hairpins 90, die die Drahtenden 20, 20a - 20d bilden. In jede Nut sind dabei nebeneinander mehrere Schenkel von Hairpins 90 eingesetzt. Damit die Spulenwicklung 88 ausgebildet wird, sollen die Drahtenden 20, 20a - 20d, in Umfangsrichtung umgeformt werden, so dass die zu verbindenden Drahtenden 20, 20a - 20d zu Paaren zusammengespannt werden können, umso eine insgesamt wellenförmige Spulenwicklung 88 zum Bilden der unterschiedlichen Phasen des Elektromotors auszubilden. Einzelheiten hierzu können der Literaturstelle [1] entnommen werden.

Fig. 5 zeigt eine Drahtendengruppe 94 aus Drahtenden 20a - 20d, die dicht nebeneinander in einer der Nuten des Gehäuses 12 angeordnet sind. Damit diese eng nebeneinanderliegenden Drahtenden 20a - 20d einer jeden Drahtendengruppe 94 in einem Schränkwerkzeug prozesssicher in Umfangsrichtung umgebogen werden können, sollten die Drahtenden 20, 20a - 20d zunächst in Radialrichtung auf eine exakte Position für das Schränkwerkzeug gebracht werden. Hierzu dient die hier vorgesehene Drahtendenumformvorrichtung 16 mit der Radial-Biegevorrichtung 22.

Nach dem Einführen der Hairpins mit ihren Schenkel in die einzelnen Nuten des Grundkörpers 12 kann es jedoch in der Praxis vorkommen, dass die einzelnen Drahtenden 20a - 20d einer jeden Drahtendengruppe 94 nicht in idealer Weise exakt gleich positioniert sind und beispielsweise in Fig. 5 gezeigt dicht nebeneinander liegen. Vielmehr können die Drahtenden einer Drahtendengruppe 94, die aus einer einzelnen Nut des Gehäuses 12 hervorsteht, auch in gewissen Maßen umgeordnet vorstehen, wie dies in Fig. 6 angedeutet ist.

Die Drahtendenumformvorrichtung 16, die Radial-Biegevorrichtung 22 sowie die einzelnen Radial-Biegeeinrichtung 38 sind so ausgebildet, dass auch bei Abweichungen der Lage der Drahtenden 20, 20a, 20b, 20c, 20d pro Drahtendengruppe 94 ein sicheres und gut definiertes Greifen eines jeden Drahtendes 20 ermöglicht ist.

Weiter lässt sich mittels des Radialantriebs 60 bei unterschiedlichen Drahtendengruppen 94 ein unterschiedlicher Radialhub einstellen, sodass einzelne Drahtenden 20, 20a - 20d ausgewählter Drahtendengruppen 94 um ein anderes Ausmaß in Radialrichtung verbogen werden können als andere Drahtenden 20, 20a - 20d anderer Drahtendengruppen 94. Dabei ist ein flexibles Einstellen des Ausmaßes, um den das jeweilige Drahtenden 20a, 20d zu verbiegen ist, sowohl bei einer Verbiegung nach radial innen als auch bei einer Verbiegung nach radial außen möglich.

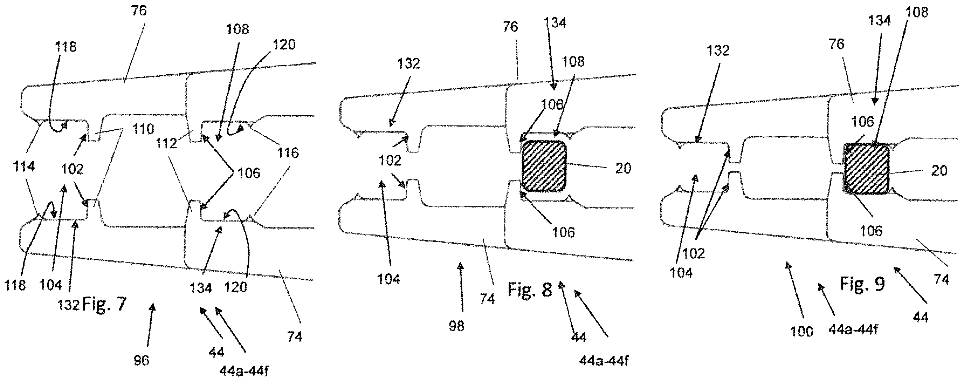

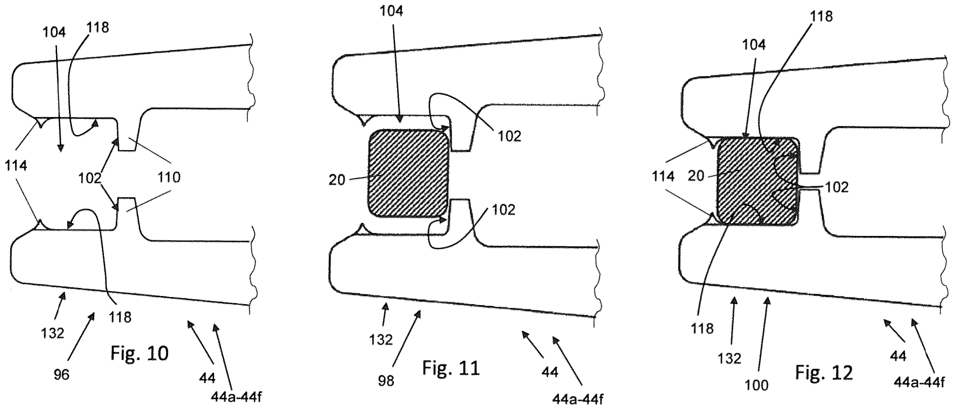

Die Fig. 7 bis 9 und 10 bis 12 zeigen hierzu den Greifer 44 mit der ersten Greiferbacke 74 und der zweiten Greiferbacke 76 von oben in unterschiedlichen Relativstellungen der Greiferbacken 74, 76. Fig. 7 und 10 zeigen hierbei eine Lösestellung 96, Fig. 8 und 11 zeigen eine Mittelstellung 98 zusammen mit einem zu erfassenden Drahtende 20, und Fig. 9 und 12 zeigen eine Klemmstellung 100, bei der das Drahtende 20 eingeklemmt ist.

Die Fig. 7 bis 9 zeigen den Greifer mit einem ersten Greifbereich 132 im Bereich der freien Enden der Greiferbacken 74, 76 und einem hierzu radial versetzten zweiten Greifbereich 134. Die Fig. 10 bis 12 zeigen nur den ersten Greifbereich 132.

Der Greifer 44 hat eine erste Anlagefläche 102, die in eine erste radiale Richtung - hier nach radial innen - zeigt und einen ersten Aufnahmeraum 104 begrenzt, zu dem die erste Anlagefläche 102 hingerichtet ist. Weiter hat der Greifer 44 eine zweite Anlagefläche 106, die in die andere radiale Richtung als die erste Anlagefläche 102 gerichtet ist - hier radial nach außen - und einen zweiten Aufnahmeraum 108 begrenzt, zu dem die zweite Anlagefläche 106 hingerichtet ist.

In Fig. 8 und 9 ist ein Drahtende 20 in dem zweiten Aufnahmeraum 108 aufgenommen. In Fig. 11 und 12 ist das Drahtende 20 in dem ersten Aufnahmeraum 104 aufgenommen.

Die Anlageflächen 102, 106 können z. B. an Stufen oder dergleichen der Greiferbacken 74, 76 ausgebildet sein. Bei dem dargestellten Ausführungsbeispiel weist jede Greiferbacke 74, 76 jeweils einen ersten Vorsprung 110 auf, sodass die erste Vorsprünge 110 zueinander gerichtet sind, und eine Seite des ersten Vorsprunges 110 einen Teil der ersten Anlagefläche 102 bildet. Weiter weist jede Greiferbacke 74, 76 einen zweiten Vorsprung 112 auf, wobei auch die zweiten Vorsprünge 112 zueinander gerichtet sind und an ihrer entgegengesetzten Seite gemeinsam die zweite Anlagefläche 106 bilden. Der zweite Vorsprung 112 ist hier mit Abstand radial nach außen vom ersten Vorsprung 110 beabstandet vorgesehen, und die Aufnahmeräume 104, 108 sind auf den jeweils entgegengesetzten Seiten der Vorsprünge 110, 112 vorgesehen. Auf der anderen radialen Seite können die Aufnahmeräume 104, 108 durch kleinere Rippen oder Zähne - im Folgenden Zahnvorsprung 114, 116 genannt - begrenzt sein.

Wie die Fig. 8 und 9 sowie 11 und 12 zeigen, ist die Größe der jeweiligen Aufnahmeräume 104, 108 an den Querschnitt der Drahtenden 20 angepasst. Der Abstand des jeweiligen Zahnvorsprungs 114, 116 zu dem entsprechenden Vorsprung 110, 112 entspricht somit der Dicke des Drahtes. Die Größe der Anlagefläche 102, 104, die durch die Höhe der entsprechenden Vorsprünge 110, 112 definiert wird, wird so gewählt, dass die Drahtenden 20 in der in Fig. 7 und 10 gezeigten Lösestellung zwischen den entgegengerichteten Vorsprüngen 110, 112 radial hindurchgeführt werden können und in der in Fig. 8 und 11 gezeigten Mittelstellung sowie in der Fig. 9 und 12 gezeigten Klemmstellung einen Abstand zueinander haben, der kleiner als die Drahtdicke ist.

Die in Fig. 8 und 11 gezeigte Mittelstellung ist eine Stellung, in der die Drahtenden 20 noch zwischen den Zahnvorsprüngen 114, 116 hindurchgeführt werden können, aber nicht mehr zwischen den Vorsprüngen 110, 112 hindurchgeführt werden können. Beispielweise ist die Mittelstellung eine halbgeschlossene Stellung.

Die in Fig. 9 und 12 gezeigte Klemmstellung ist eine Stellung, in der an den Greiferbacken 74, 76 ausgebildete, sich in radialer Richtung und axialer Richtung erstreckende Klemmflächen 118, 120 gegen ein in dem jeweiligen Aufnahmeraum 104, 108 aufgenommenes Drahtende 20 klemmen und dieses so reibschlüssig und zwischen dem entsprechenden Vorsprung 110, 112 und dem entsprechenden Zahnvorsprung 114, 116 auch formschlüssig fest erfassen.

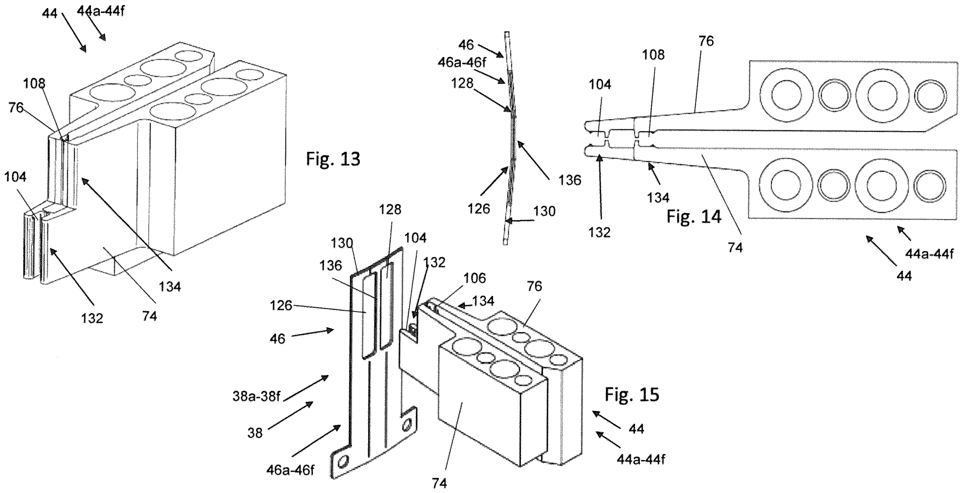

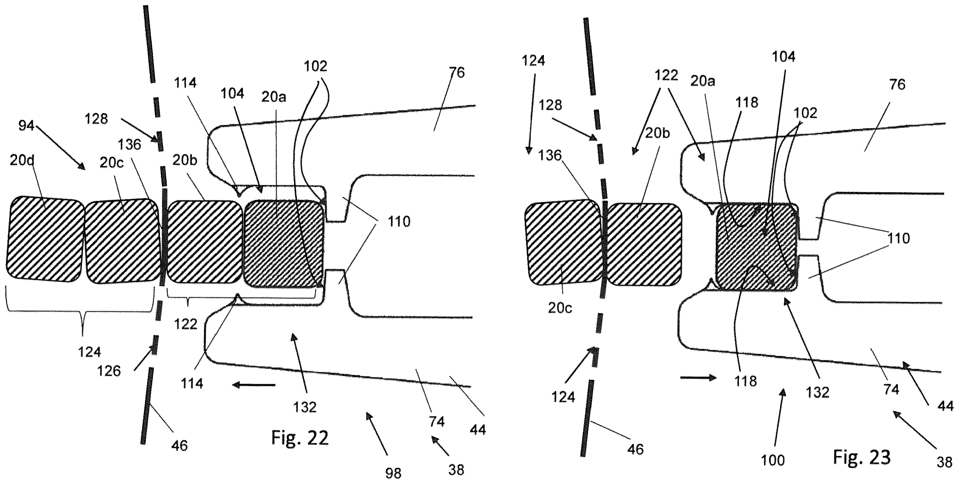

Die Zahnvorsprünge 114, 116 haben vorzugsweise einen keilförmigen Querschnitt, sodass sie zwischen zwei Drahtenden 20a, 20b oder 20c, 20d der Drahtendengruppe 94 eingreifen können, wie dieser beispielsweise in Fig. 22, 23 und 25, 26 dargestellt ist. Fig. 13 zeigt eine perspektivische Ansicht des Greifers 44 und die Fig. 14 - 15 zeigen den Greifer 44 zusammen mit dem dazugehörigen Gegenlagerelement 46. Wie aus Fig. 13 ersichtlich, sind die Greiferbacken 74, 76 an ihrer Spitze gestuft ausgebildet, sodass der erste Aufnahmeraum 104 und der zweite Aufnahmeraum 108 zumindest bereichsweise axial versetzt zueinander sind.

Das Gegenlagerelement 46 ist ein flächiges Element, beispielsweise aus Metallblech, das eine derartige Dicke aufweist, dass es zwischen zwei Drahtenden 20b, 20c der Drahtendengruppe 94 axial eingeführt werden kann und so die Drahtendengruppe 94 in einen ersten Teil 122, beispielsweise umfassend ein radial am weitesten außen liegendes erstes Drahtende 20a und ein radial von außen an zweiter Stelle liegendes zweites Drahtende 20b, und in einen zweiten Teil 124 aufteilt, die die übrigen Drahtenden 20c, 20d der Drahtendengruppe 94, also beispielsweise ein am weitesten radial innen liegendes viertes Drahtende 20d und ein von radial innen gesehen an zweiter Stelle liegendes drittes Drahtende 20c aufweist.

Die Dicke des Gegenlagerelements 46 als Blechwandung ausgebildet ist so gewählt, dass ein axiales Einführen des Gegenlagerelements 46 durch Relativbewegung des ringförmigen Gehäuses 12 mit den vorstehenden Drahtenden 20, 20a - 20d in der Richtung 28 zwischen die Drahtenden 20b, 20c geführt werden können, ohne dass sich diese Drahtenden 20b, 20c plastisch verformen. Wie oben erläutert, kann bei einer Ausführungsform der Gegenlagerelementanordnung 54 diese insgesamt als Hülse ausgebildet sein, welche jeweils zwischen die mittleren Drahtenden 20b, 20c aller Drahtendengruppen 94 bei allen Nuten des Gehäuses 12 vorstehen.

Bei der dargestellten Ausführungsform sind insgesamt sechs Radial-Biegeeinrichtungen 38, 38a - 38f vorgesehen, die jeweils über den Umfang verteilt sechs Drahtendengruppen 94 gleichzeitig bearbeiten und nach Fertigstellung der Bearbeitung mittels des Drehantriebes 36 jeweils auf die nächste, benachbarte Drahtendengruppe 94 eingestellt werden. Es ist bei einer solchen Ausgestaltung ausreichend, dass jeweils gesonderte Gegenlagerelemente 46, 46a - 46f als Hülsensegmente vorgesehen sind, wie sie in Fig. 16 dargestellt sind und an dem Grundkörper 56 befestigt sind. Die als Hülsensegmente ausgebildeten Gegenlagerelemente 46, 46a - 46f werden zusammen mit ihren Greifern 44, 44a - 44f dann mittels des Drehantriebes 36 jeweils zu der nächsten zu bearbeitenden Drahtendengruppe 94 verdreht. Durch eine lösbare Befestigung der Gegenlagerelemente 46, 46a-46f an dem Grundkörper 56 lassen sich diese im Zuge von Wartungsarbeiten bedarfsweise je nach Verschleiß leicht ersetzen, ohne den Grundkörper 56 austauschen zu müssen.

Die Gegenlagerelementanordnung 54 ist in unterschiedliches Ausrichten in den Fig. 17 bis 20 gezeigt. Die Fig. 15 bis 16 zeigen jeweils ein Gegenlagerelement 46 der Gegenlagerelementanordnung 54.

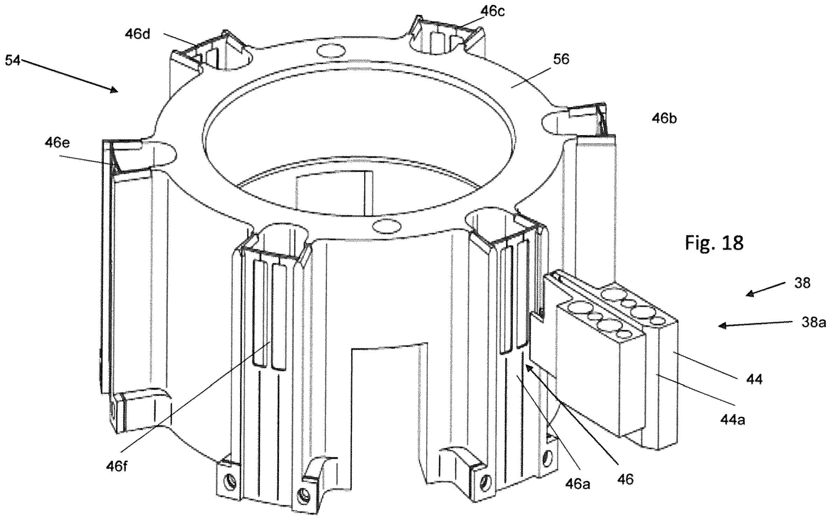

Wie insbesondere aus Fig. 16 und Fig. 18 ersichtlich ist, weist das Gegenlagerelement 46 eine erste Aussparung oder Ausnehmung 126, durch welche das freie Ende der ersten Greiferbacke 74 radial hindurchgeführt werden kann, und eine zweite Aussparung oder Ausnehmung 128 auf, durch welche das freie Ende der zweiten Greiferbacke 76 radial hindurchgeführt werden kann. Die Berandung 130 um die Ausnehmung 126, 128 dient als Gegenlager für die Drahtenden 20, 20a - 20d, um diese zwischen der jeweiligen Anlagefläche 102, 106 und dem Gegenlagerelement 46 zu positionieren.

Wie aus den Fig. 7 bis 9 sowie 10 bis 12 hervorgeht, dient der weiter radial innen liegende erste Aufnahmeraum 104 zum Weiten, d. h. radialen Verbiegen, der radial äußeren Drahtenden 20a, 20b des radial äußeren ersten Teils 122 der Drahtendengruppe 94 radial nach außen. Der radial weiter außen liegende zweite Aufnahmeraum 104 dient zum radialen Weiten, d. h. radialen Umformen der radial weiter innen liegenden Drahtenden 20c, 20d des radial inneren zweiten Teils 124 der Drahtendengruppe 94 radial nach innen.

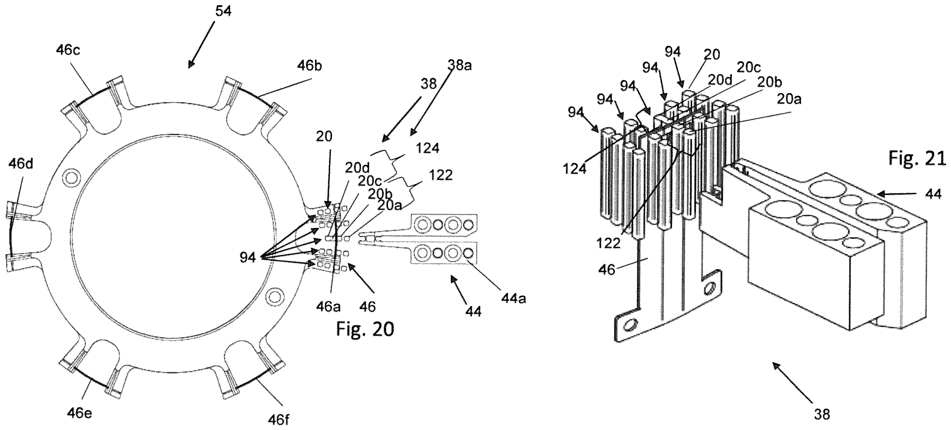

Die Fig. 20 und 21, zeigen fünf Drahtendengruppen 94 aus fünf aufeinanderfolgenden benachbarten Nuten des ringförmigen Gehäuses 12 mit jeweils vier Drahtenden 20a - 20d, wobei gerade die mittlere der Drahtendengruppen 94 durch die Radial-Biegeeinrichtung 38 zu bearbeiten ist. Es ist dargestellt, wie das Gegenlagerelement 46 axial von unten zwischen die nach unten aus dem ringförmigen Gehäuse 12 vorstehenden zweiten und dritten Drahtenden 20b, 20c eingeschoben ist, um so die Drahtendengruppen 94 in den ersten Teil 122 und den zweiten Teil 124 aufzuteilen.

Im Folgenden wird anhand der Darstellungen in den Fig. 20 bis 26 eine bevorzugte Ausführungsform des Radial-Biegeverfahrens näher erläutert. Es wird dabei angenommen, dass zum Beispiel die in Fig. 6 dargestellte Drahtendengruppe 94 mit nicht ideal ausgerichteten Drahtenden 20a - 20d radial zu verbiegen ist.

Wie in Fig. 6 dargestellt, liegen die freien Pinenden - erstes bis viertes Drahtende 20a - 20d - in Regel nicht parallel zueinander ausgerichtet. Auf Grund vorhergehender Herstellverfahren, wie z. B. Biegen der Hairpins können die Drahtenden 20a - 20d leicht versetzt in tangentialer Richtung und auch verdreht vorliegen.

Fig. 20 bis 22 zeigen die Aufteilung der Drahtendengruppe 94 in den radial äußeren ersten Teil 122 und den radial inneren zweiten Teil 124.

Wie dies in den Fig. 20 und 21 dargestellt ist, fahren zunächst die in der Lösestellung 96 befindlichen Greifer 44 zwischen die Drahtenden 20 der jeweils benachbarten Drahtendengruppen 94 ein. Die Greifer 44 werden in die Mittelstellung 98 überführt, hierzu werden sie beispielsweise halb geschlossen und axial nach innen bewegt. Wie in Fig. 22 dargestellt, werden so die Drahtenden 20a, 20b des ersten Teils 122 der Drahtendengruppe 94 zwischen der ersten Anlagefläche 102 und der radial äußeren Fläche des Gegenlagerelements 46 eingefasst. Die in der Mittelstellung 98 halbgeöffneten Greifer 44 fahren radial auf die zuerst zu bearbeitenden Drahtenden 20a, 20b des ersten Teils 122 auf und drücken diese über ihre Schulter oder erste Anlagefläche 102 gegen einen durch das Gegenlagerelement 46 gebildeten Gegenhalter. Die Greifer 44 schließen und klemmen die zu bearbeitenden Drahtenden 20a. Die Greifer 44 werden, wie dies in Fig. 23 dargestellt ist, radial nach außen bewegt. Die Greifer 44 werden an der Zielposition geöffnet.

Dieser Vorgang wird dann für alle Drahtenden 20b des ersten Teils der Drahtendengruppe wiederholt.

Durch das Klemmen mittels des durch das Gegenlagerelement 46 gebildeten Gegenhalters wird die Prozesssicherheit erhöht. Es lassen sich auch abweichende Positionen der Drahtenden 20a, 20b handhaben.

Wie die Fig. 22 - 26 zeigen, werden die Pins einer jeden Nut, d. h. die Drahtenden 20a - 20d einer jeden Drahtendengruppe 94 durch das Gegenlagerelement 46 und die Gegenlagerelementanordnung 54 in zwei Gruppen 122, 124 aufgeteilt.

Wie oben erläutert geschieht dies dadurch, dass das beispielsweise als Stator 18 ausbildete Bauteil 14 mit den freien Pinenden axial auf eine feststehende Hülse bzw. die Gegenlagerelementanordnung 54 aufgeschoben wird. Auf Grund der geringen Wandstärke der Hülse werden die Drahtenden 20, 20a - 20d nicht plastisch verformt. Die Funktion der Hülse besteht im Gegenhalten beim Greifen der Pins.

In Verbindung mit der beschriebenen Hülse werden Greiferbacken 74, 76 verwendet, die zwei Greifbereiche 132, 134 aufweisen. Der erste Greifbereich 132 ist an dem in den Fig. 22 und 23 dargestellten vorderen Bereich des Greifers 44, hier dem radial nach innen ragendem Bereich, ausgebildet. Ein hinterer Greifbereich, hier ein radial weiter außen liegender zweiter Greifbereich 134 ist gespiegelt ausgebildet. Die Schulter bzw. zweite Anlagefläche 106 liegt radial weiter innen als der durch die zweite Klemmfläche 120 begrenzte zweite Aufnahmeraum 108. Zusätzlich ist der radial weiter innen liegende vordere Bereich im Vergleich zum hinteren Bereich abgesetzt ausgeführt.

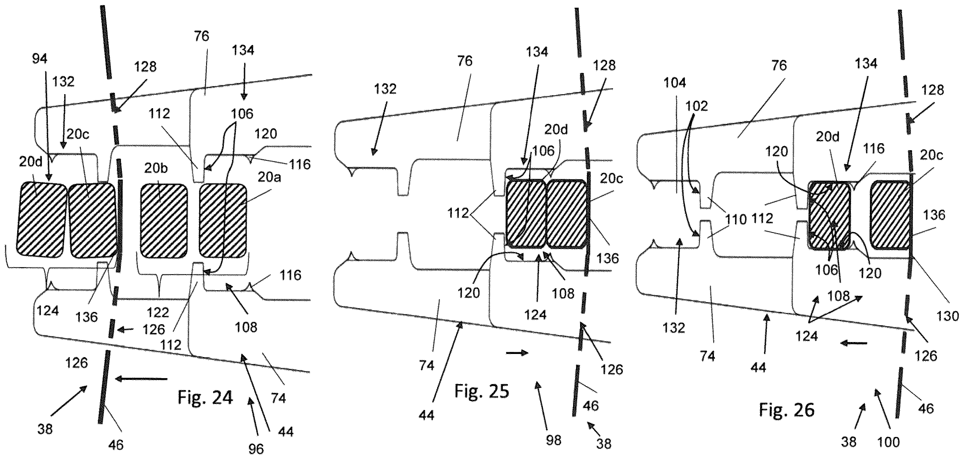

Nachdem die nach radial außen zu weitenden Drahtenden 20a, 20b des ersten Teils 122 der Drahtendengruppe 94 mit dem zuvor anhand der Fig. 22 und 23 beschriebenen Verfahren radial nach außen aufgeweitet worden sind, werden die radial weiter innen liegenden Drahtenden 20c, 20d des zweiten Teils 124 der Drahtendengruppe 94 radial nach innen aufgeweitet, was im Folgenden anhand der Fig. 24 bis 26 erläutert wird.

Hierzu wird, wie dies in Fig. 24 dargestellt ist, der Greifer 44 vollständig geöffnet und somit in die Lösestellung 96 überführt. Der in der Lösestellung 96 befindliche Greifer 44 wird zwischen den benachbarten Drahtendengruppen 94 und durch die Ausnehmungen 126, 128 des Gegenlagerelements 46 radial hindurchgeführt - siehe Fig. 24. In einem nächsten Schritt wird der Greifer 44 in die Mittelstellung 98 überführt, z. B. halb geschlossen. Der Greifer 44 wird, wie dies in Fig. 25 gezeigt ist, radial nach außen gefahren, so dass der Greifer 44 über die zweite Schulter bzw. die zweite Anlagefläche 106 die Drahtenden 20c, 20d des zweiten Teils 124 der Drahtendengruppe 94 nach außen gegen die radial nach innen weisende Anlagefläche des Gegenhalterelements 46 drückt. Hierdurch werden die Drahtenden 20c, 20d des zweiten Teils 124 der Drahtendengruppe 94 axial positioniert. Befindet sich der Greifer 44 in der korrekten Position, wird der Greifer 44 geschlossen und somit in die Klemmstellung 100 überführt. Hierdurch wird das jeweils zu erfassende Drahtende 20d erfasst und kann durch axial nach innen erfolgende Bewegung des Greifers 44 radial nach innen umgeformt werden, wie dies in Fig. 26 dargestellt ist.

An der Zielposition wird der Greifer 44 geöffnet. Danach wird der Vorgang zum Weiten aller verbleibender Drahtenden 20c des zweiten Teils 124 der Drahtendengruppe 94 wiederholt.

Wie die Fig. 25 und 26 zeigen können die inneren beiden Drahtenden 20c, 20d der Drahtendengruppe 94 durch den zweiten Greifbereich 134 nach innen geweitet werden. In Fig. 25 ist das beispielsweise als Hülse ausgebildete Gegenlagerelement 46 dargestellt. Der radial innerste Pin - das vierte Drahtende 20d - wird in diesem Fall über die an den Vorsprüngen 112 ausgebildeten Schultern, welche die zweite Anlagefläche 106 ausbilden gegen den zweit innersten Pin - das dritte Drahtenden 20c - gedrückt, welches wiederum an dem Gegenlagerelement 46 anliegt.

Wie zuvor erläutert, wird bei der Radial-Biegevorrichtung 22 der dargestellten Ausführungsformen keine Hülse, sondern insgesamt sechs Hülsensegmente als Gegenlagerelemente 46, 46a - 46f verwendet. Die Gegenlagerelemente 46, 46a - 46f sind so ausgeformt, dass die beiden Greifbacken 74, 76 durch die Aussparungen oder Ausnehmungen 126, 128 durchgeführt werden können. Ein Steg 136 trennt die beiden Aussparungen oder Ausnehmungen 126, 128 voneinander. Die zu bearbeitenden Pins oder Drahtenden 20, 20a - 20d werden zur Positionierung an diesem Steg 136 angedrückt.

Weiter ist aus den jeweils perspektivischen Darstellungen der Fig. 2, 3, 13, 15, 21 der abgesetzte Greifer 44 zu erkennen, bei dem der vordere, tiefer liegende erste Greifbereich 132 für die Bearbeitung der äußeren Pins - erstes und zweites Drahtende 20a, 20b des ersten Teils 122 der Drahtendengruppe 94 - der äußere, höhere liegende zweite Greifbereich 134 für die Bearbeitung der inneren Pins - drittes und viertes Drahtende 20c, 20d des zweiten Teils 124 der Drahtendengruppe 94 - verwendet wird. Diese Konstellation des abgesetzten Greifers ist vorteilhaft, damit beim Greifen der inneren Pins die äußeren, bereits bearbeitenden Pins nicht mitgegriffen werden.

Es ist somit eine Radial-Biegeeinrichtung 38, 38a - 38f beschrieben worden, die bei einer Herstellung eines mit Spulen versehenen Bauteils 14 einer elektrischen Maschine verwendbar ist und zum Verbiegen von aus einem ringförmigen Gehäuse 12 des Bauteils 14 axial vorstehenden Drahtenden 20, 20a - 20d einer Drahtendengruppe 94 ausgebildet ist. Die Drahtendengruppe 94 hat drei oder mehr aufeinanderfolgend angeordnete Drahtenden 20a - 20d. Die Drahtenden 20, 20a - 20d können mit der Radial-Biegeeinrichtung 38, 38a - 38f in radialer Richtung verbogen werden, um sie für weitere Bearbeitungsschritte, insbesondere zum Schränken vorzubereiten, wie dies näher in der Literaturstelle [1] beschrieben und gezeigt ist.

Die Radial-Biegeeinrichtung 38 hat den radial beweglichen Greifer 44 und das Gegenlagerelement 46. Der radial bewegliche Greifer 44 ist zum Ergreifen wenigstens eines der Drahtenden 20, 20a - 20d ausgebildet und weist die erste, in eine erste radiale Richtung weisende Anlagefläche 102 für wenigstens ein Drahtende 20a, 20b und die zweite, in die entgegengesetzte zweite radiale Richtung weisende Anlagefläche 106 für wenigstens ein Drahtende 20c, 20d auf. Das Gegenlagerelement 46 erstreckt sich länglich oder flächig in Umfangsrichtung und ist zum derartigen axialen Einfügen zwischen zwei radial benachbarte Drahtenden 20b, 20c der Drahtendengruppe 94 ausgebildet, dass diese nicht plastisch verformt werden. Hierdurch kann die Drahtendengruppe 94 in mehrere Teile 122, 124 aufgeteilt werden.

In einem in den Fig. 22 und 23 gezeigten ersten radialen Bewegungsbereich des Greifers 44 dient eine Seite des Gegenlagerelements 46 als Gegenlager für die erste Anlagefläche 102, um wenigstens ein auf dieser einen Seite befindliches Drahtende 20a, 20b des ersten Teils 122 der Drahtendengruppe 94 zwischen dem Gegenlagerelement 46 und der ersten Anlagefläche 102 einzufassen. In einem zweiten radialen Bewegungsbereich des Greifers 44, der in den Fig. 24 - 26 wiedergegeben ist, dient die andere Seite des Gegenlagerelements 46 als Gegenlager für die zweite Anlagefläche 106, um wenigstens ein auf der anderen Seite befindliches Drahtende 20c, 20d des zweiten Teils 124 der Drahtendengruppe zwischen dem Gegenlagerelement 46 und der zweiten Anlagefläche 106 einzufassen.

Die Steuerung 26 und insbesondere die Radial-Biegesteuerung 42 ist dazu ausgebildet, die Radial-Biegeeinrichtung 38 und/oder die Drahtendenumformvorrichtung 16, welche die mehreren Radial-Biegeeinrichtungen 38, 38a - 38f aufweist, zum Durchführen des im Folgenden näher erläuterten Radial-Biegeverfahrens anzusteuern. Hierzu kann die Steuerung eine Recheneinheit und einen Speicher aufweisen, wobei ein auf einem Computerprogrammprodukt gespeichertes Computerprogramm auf den Speicher geladen werden kann und/oder in den Rechner geladen werden kann und entsprechende Steueranweisungen zum Durchführen des Radial-Biegeverfahrens aufweist.

Das Radial-Biegeverfahren umfasst die folgenden Schritte:
a) Axiales Einfügen des sich länglich oder flächig in Umfangsrichtung erstreckenden Gegenlagerelements 46 zwischen zwei radial benachbarte Drahtenden 20b, 20c der Drahtendengruppe 94, um die Drahtendengruppe in mehrere Teile 122, 124 aufzuteilen;
b) Einfassung und Ausrichten wenigstens eines Drahtendes 20a, 20b des ersten Teils 122 der Drahtendengruppe 94 zwischen der einen Seite des Gegenlagerelements 46 und der ersten Anlagefläche 102 durch eine entsprechende radiale Bewegung des Greifers 44 mit sich in der Mittelstellung befindlichen Greiferbacken 74, 76;
c) Klemmen des wenigstens einen Drahtendes 20a, 20b des ersten Teils 122 der Drahtendengruppe 94 in dem durch die erste Anlagefläche 102 begrenzten ersten Aufnahmeraum 104 durch Bewegen der Greiferbacken 74, 76 in die Klemmstellung;
d) Radiales Bewegen des Greifers 44, um das in dem ersten Aufnahmeraum 104 aufgenommene wenigstens eine Drahtende 20a, 20b des ersten Teils 122 der Drahtendengruppe 94 radial zu verbiegen;
e) Radiales Bewegen des Greifers 44 mit Greiferbacken 74, 76 in der Lösestellung zu der anderen Seite des Gegenlagerelements 46;
f) Einfassen und Ausrichten wenigstens eines Drahtendes 20c, 20d des zweiten Teils 124 der Drahtendengruppe zwischen der anderen Seite des Gegenlagerelements 46 und der zweiten Anlagefläche 106 mit sich in der Mittelstellung befindlichen Greiferbacken 74, 76;
g) Klemmen des wenigstens einen Drahtendes 20c, 20d des zweiten Teils 124 der Drahtendengruppe 94 in dem durch die zweite Anlagefläche 106 begrenzten zweiten Aufnahmeraum 108 durch Bewegen der Greiferbacken 74, 76 in die Klemmstellung; und
h) Radiales Bewegen des Greifers 44, um das in dem zweiten Aufnahmeraum 108 aufgenommene wenigstens eine Drahtende 20c, 20d radial zu verbiegen.

Durch dieses Radial-Biegeverfahren lässt sich einerseits auch bei abweichender Ausrichtung der Drahtenden 20a - 20d einer Drahtendengruppe 94 eine exakte Positionierung und ein exaktes Erfassen der Drahtenden mittels des Greifers 44 erreichen, andererseits lässt sich das Ausmaß, um das die einzelnen Drahtenden 20a, 20b, 20c, 20d jeweils verbogen werden, sowohl nach innen als auch nach außen hin flexibel einstellen.

Zum Beispiel wird bei nahezu allen Drahtendengruppen 94 nahezu aller Nuten ein gleicher Radial-Hub für die jeweils ersten Drahtenden 20a, die jeweils zweiten Drahtenden 20b, die jeweils dritten Drahtenden 20c und die jeweils vierten Drahtenden 20d eingestellt. An einigen Nuten wird z. B. für das radial am weitesten innen liegende Drahtende 20d und für das am weitesten außen liegende Drahtende 20a ein abweichender, z. B. größerer Betrag der Verbiegung eingestellt, um diese z. B. in nachfolgenden Biegeverfahren anders zu handhaben. Zum Beispiel können zur Verschaltung der Spulen längere Drahtenden vorgesehen sein, die weiter nach innen oder weiter nach außen zu verbiegen sind, um sie in gesonderte Taschen eines Schränkwerkzeuges einzufügen. Mit der hier dargestellten Drahtendenumformvorrichtung ist ein flexibles Weiten sowohl nach innen hin als auch nach außen für derartige Sonderpins möglich.

Bei anderen, nicht gezeigten Ausgestaltungen sind fünf oder sechs oder mehr Drahtenden 20, pro Nut und somit pro Drahtendengruppe 94 vorgesehen.

Bei anderen Ausgestaltungen der Radial-Biegevorrichtung 22 sind mehr oder weniger als sechs Radial-Biegeeinrichtungen 38 vorgesehen.

### Bezugszeichenliste:

- 10: Anordnung
- 12: ringförmiges Gehäuse
- 14: Bauteil
- 16: Drahtendenumformvorrichtung
- 18: Stator
- 20: Drahtende
- 20a: erstes Drahtende
- 20b: zweites Drahtende
- 20c: drittes Drahtende
- 20d: viertes Drahtende
- 22: Radial-Biegevorrichtung
- 24: Halterung
- 26: Steuerung
- 28: axiale Relativbewegung
- 30: zentrale Achse
- 32: relative Drehbewegung
- 34: Axialbewegungsaktor
- 36: Drehantrieb
- 38: Radial-Biegeeinrichtung
- 38a: erste Radial-Biegeeinrichtung
- 38b: zweite Radial-Biegeeinrichtung
- 38c: dritte Radial-Biegeeinrichtung
- 38d: vierte Radial-Biegeeinrichtung
- 38e: fünfte Radial-Biegeeinrichtung
- 38f: sechste Radial-Biegeeinrichtung
- 40: Halterungssteuerung
- 42: Radial-Biegesteuerung
- 44: Greifer
- 44a: erster Greifer
- 44b: zweiter Greifer
- 44c: dritter Greifer
- 44d: vierter Greifer
- 44e: fünfter Greifer
- 44f: sechster Greifer
- 46: Gegenlagerelement
- 46a: erstes Gegenlagerelement
- 46b: zweites Gegenlagerelement
- 46c: drittes Gegenlagerelement
- 46d: viertes Gegenlagerelement
- 46e: fünftes Gegenlagerelement
- 46f: sechstes Gegenlagerelement
- 48: Grundplatte
- 50: Zahnriementrieb
- 52: Drehbasis
- 54: Gegenlagerelementanordnung
- 56: Grundkörper
- 58: Führung
- 60: Radialantrieb
- 62: Radialantriebsaktor
- 64: Ringplatte
- 66: Kurvenführung
- 68: Greiferbasis
- 70: Greiferantrieb
- 72: Greiferbackenführung
- 74: erste Greiferbacke
- 76: zweite Greiferbacke
- 78: erster Greiferbackenhebel
- 80: zweiter Greiferbackenhebel
- 82: Greiferbackenhebellagerung
- 84: radial innerer Hebelarm
- 86: radial äußerer Hebelarm
- 88: Spulenwicklung
- 90: Hairpin
- 92: Wicklungskopf
- 94: Drahtendengruppe
- 96: Lösestellung
- 98: Mittelstellung
- 100: Klemmstellung
- 102: erste Anlagefläche
- 104: erster Aufnahmeraum
- 106: zweite Anlagefläche
- 108: zweiter Aufnahmeraum
- 110: erster Vorsprung
- 112: zweiter Vorsprung
- 114: erster Zahnvorsprung
- 116: zweiter Zahnvorsprung
- 118: erste Klemmfläche
- 120: zweite Klemmfläche
- 122: erster Teil der Drahtendengruppe
- 124: zweiter Teil der Drahtendengruppe
- 126: erste Ausnehmung
- 128: zweite Ausnehmung
- 130: Berandung
- 132: erster Greifbereich
- 134: zweiter Greifbereich
- 136: Steg

## Patentansprüche

1. Radial-Biegeeinrichtung (38) zur Verwendung bei einer Herstellung eines mit Spulen versehenen Bauteils (14) einer elektrischen Maschine und zum Verbiegen von aus einem ringförmigen Gehäuse (12) des Bauteils (14) axial vorstehenden Drahtenden (20) einer Drahtendengruppe (94), die wenigstens drei in radialer Richtung aufeinanderfolgend angeordnete Drahtenden (20, 20a - 20d) aufweist, in einer radialen Richtung umfassend:
einen radial beweglichen Greifer (44), der zum Ergreifen wenigstens eines der Drahtenden (20) und zum Verbiegen des wenigstens einen Drahtendes (20) in die radiale Richtung ausgebildet ist, **dadurch gekennzeichnet,**
**dass** der Greifer (44) eine erste in eine erste radiale Richtung weisende Anlagefläche (102) für wenigstens ein Drahtende (20) und eine zweite, in die entgegengesetzte zweite radiale Richtung weisende Anlagefläche (106) für wenigstens ein Drahtende (20) aufweist, und
**dass** ein sich länglich oder flächig mit einer ersten und einer zweiten Seite in Umfangsrichtung erstreckendes Gegenlagerelement (46) zum axialen Einfügen zwischen zwei radial benachbarten Drahtenden (20) der Drahtendengruppe (94) vorgesehen ist, um die Drahtendengruppe (94) in mehrere Teile (122, 124) aufzuteilen,
wobei in einem ersten radialen Bewegungsbereich des Greifers (44) die erste Seite des Gegenlagerelements (46) als Gegenlager für die erste Anlagefläche (102) ausgebildet ist, um wenigstens ein auf der ersten Seite befindliches Drahtende (20) eines ersten Teils (122) der Drahtendengruppe (94) zwischen dem Gegenlagerelement (46) und der ersten Anlagefläche (102) einzufassen, und in einem zweiten radialen Bewegungsbereich des Greifers (44) die zweite Seite des Gegenlagerelements (46) als Gegenlager für die zweite Anlagefläche (106) ausgebildet ist, um wenigstens ein auf der zweiten Seite befindliches Drahtende (20) eines zweiten Teils (124) der Drahtendengruppe (94) zwischen dem Gegenlagerelement (46) und der zweiten Anlagefläche (106) einzufassen.

2. Radial-Biegeeinrichtung (38) nach Anspruch 1,
**dadurch gekennzeichnet,**
**dass** der Greifer (44) einen ersten Aufnahmeraum (104) für das wenigstens eine Drahtende (20) des ersten Teils (122) der Drahtendengruppe (94) hat, wobei der erste Aufnahmeraum (104) durch die erste Anlagefläche (102) begrenzt ist, und einen radial zu dem ersten Aufnahmeraum (104) beabstandeten zweiten Aufnahmeraum (108) für das wenigstens eine Drahtende (20) des zweiten Teils (124) der Drahtendengruppe (94) hat, wobei der zweite Aufnahmeraum (108) durch die zweite Anlagefläche (106) begrenzt ist.

3. Radial-Biegeeinrichtung (38) nach einem der voranstehenden Ansprüche, **dadurch gekennzeichnet,**
**dass** der Greifer (44) mit einer ersten und einer zweiten Greiferbacke (74, 76) versehen ist, die relativ zueinander bewegbar sind und von denen wenigstens eine Greifbacke (74, 76) wenigstens einen auf die andere Greifbacke (74, 76) zu vorspringenden Vorsprung (110, 112) aufweist, an dem wenigstens ein Teilbereich wenigstens einer der Anlageflächen (102, 106) ausgebildet ist.

4. Radial-Biegeeinrichtung (38) nach Anspruch 2 und nach Anspruch 3, **dadurch gekennzeichnet,**
**dass** die Aufnahmeräume (104, 108) an den in Umfangsrichtung gerichteten Seiten durch sich radial erstreckende Klemmflächen (118, 120) der Greiferbacken (74, 76) und/oder an den der jeweiligen Anlagefläche (102, 106) gegenüberliegenden Seite durch wenigstens einen Zahnvorsprung (114, 116), der kleiner als der Vorsprung (110, 112) vorsteht, begrenzt ist.

5. Radial-Biegeeinrichtung (38) nach einem der voranstehenden Ansprüche, **dadurch gekennzeichnet**,
5.1 dass die erste Anlagefläche (102) und die zweite Anlagefläche (106) axial beabstandet zueinander sind;
5.2 dass die erste Anlagefläche (102) an einem ersten Vorsprung (110), der von wenigstens einer Greiferbacke (74, 76) des Greifers (44) vorsteht, ausgebildet ist und die zweite Anlagefläche (106) an einem zweiten Vorsprung (112), der von der wenigstens einen Greiferbacke (74, 76) des Greifers (44) vorsteht, ausgebildet ist, vorzugsweise derart, dass der erste und der zweite Vorsprung (110, 112) radial und/oder axial beabstandet zueinander sind.

6. Radial-Biegeeinrichtung (38) nach einem der voranstehenden Ansprüche, **dadurch gekennzeichnet,**
**dass** das Gegenlagerelement (46):
6.1 als Teil oder Segment einer sich in Umfangsrichtung erstreckenden Hülse ausgebildet ist;
6.2 als Blechwandung ausgebildet ist; oder
6.3 wenigstens eine Aussparung (126, 128) zum Durchführen von freien Enden von Greiferbacken (74, 76) des Greifers (44) aufweist.

7. Radial-Biegevorrichtung (22), umfassend mehrere in Umfangsrichtung beabstandete Radial-Biegeeinrichtungen (38) nach einem der voranstehenden Ansprüche, um mehrere in Umfangsrichtung beabstandete Drahtendengruppen (94) gleichzeitig zu bearbeiten.

8. Drahtendenumformvorrichtung (16) zur Verwendung bei einer Herstellung eines mit Spulen versehenen Bauteils (14) einer elektrischen Maschine, zum Umformen von aus einem ringförmigen Gehäuse (12) des Bauteils (14) vorstehenden Drahtenden (20), umfassend eine Radial-Biegeeinrichtung (38) nach einem der Ansprüche 1 bis 6 oder eine Radial-Biegevorrichtung (22) nach Anspruch 7 und eine Halterung (24) für das Bauteil (14), die relativ zu der Radial-Biegeeinrichtung (38) bzw. Radial-Biegevorrichtung (22) axial beweglich und relativ zu der Radial-Biegeeinrichtung (38) bzw. Radial-Biegevorrichtung (22) um eine zentrale Achse (30) drehbar ist.

9. Drahtendenumformvorrichtung (16) nach Anspruch 8, umfassend eine Steuerung (26), die dazu ausgebildet ist, die Drahtendenumformvorrichtung (16) zum Durchführen der Schritte des Radial-Biegeverfahrens nach Anspruch 11 anzusteuern.

10. Anordnung (10), umfassend eine Einrichtung oder Vorrichtung nach einem der voranstehenden Ansprüche und ein mit einem ringförmigen Gehäuse (12) versehenes Bauteil (14), aus welchem Gehäuse (12) axial Drahtenden (20) einer Drahtendengruppe (94) vorstehen, die wenigstens drei in radialer Richtung aufeinanderfolgend angeordnete Drahtenden (20, 20a - 20d) aufweist.

11. Radial-Biegeverfahren zur Durchführung im Zuge der Herstellung eines mit Spulen versehenen Bauteils (14) einer elektrischen Maschine, um aus einem ringförmigen Gehäuse (12) des Bauteils axial vorstehende Drahtenden (20) einer Drahtendengruppe (94), die wenigstens drei in radialer Richtung aufeinanderfolgende angeordnete Drahtenden (20) aufweist, in einer radialen Richtung zu verbiegen, **gekennzeichnet durch**:
a) axiales Einfügen eines sich länglich oder flächig in Umfangsrichtung erstreckenden Gegenlagerelements (46) zwischen zwei radial benachbarten Drahtenden (20) der Drahtendengruppe (94), um die Drahtendengruppe (94) in mehrere Teile (122, 124) aufzuteilen;
b) Einfassen und Ausrichten wenigstens eines Drahtendes (20) eines ersten Teils (122) der Drahtendengruppe (94) zwischen einer Seite des Gegenlagerelements (46) und einer ersten in die eine radiale Richtung gerichteten Anlagefläche (102) eines Greifers (44) **durch** eine entsprechende radiale Bewegung des Greifers (44) mit sich in einer Mittelstellung (98) befindlichen Greiferbacken (74, 76);
c) Klemmen des wenigstens einen Drahtendes (20) des ersten Teils (122) der Drahtendengruppe (94) in einem **durch** die erste Anlagefläche (102) begrenzten ersten Aufnahmeraum (104) **durch** Bewegen der Greiferbacken (74, 76) in eine Klemmstellung (100),
d) radiales Bewegen des Greifers (44), um das in dem ersten Aufnahmeraum (104) aufgenommene wenigstens eine Drahtende (20) des ersten Teils (122) der Drahtendengruppe (94) radial zu verbiegen;
e) radiales Bewegen des Greifers (44) mit Greiferbacken (74, 76) in einer Lösestellung (96) zu der anderen Seite des Gegenlagerelements (46);
f) Einfassen und Ausrichten wenigstens eines Drahtendes (20) eines zweiten Teils (124) der Drahtendengruppe (94) zwischen der anderen Seite des Gegenlagerelements (46) und einer zweiten in die andere radiale Richtung gerichteten Anlagefläche (106) des Greifers (44) mit sich in der Mittelstellung (98) befindlichen Greiferbacken (74, 76);
g) Klemmen des wenigstens einen Drahtendes (20) des zweiten Teils (124) der Drahtendengruppe (94) in einem **durch** die zweite Anlagefläche (106) begrenzten zweiten Aufnahmeraum (108) **durch** Bewegen der Greiferbacken (74, 76) in die Klemmstellung (100),
h) radiales Bewegen des Greifers (44), um das in dem zweiten Aufnahmeraum (108) aufgenommene wenigstens eine Drahtende (20) radial zu verbiegen.

12. Radial-Biegeverfahren nach Anspruch 11,
**dadurch gekennzeichnet**,
12.1 dass die Schritte b) bis d) vor Durchführen des Schritts e) zum Verbiegen anderer Drahtenden (20) des ersten Teils (122) der Drahtendengruppe (94) wiederholt werden; und/oder
12.2 dass die Schritte f) bis h) zum Verbiegen anderer Drahtenden (20) des zweiten Teils (124) der Drahtendengruppe (94) wiederholt werden und/oder
12.3 dass das Verfahren, zumindest mit den Schritten b) bis h), an anderen Drahtendengruppen (94) des Bauteils (14) wiederholt wird, bis alle vorstehenden Drahtenden (20) entsprechend radial umgeformt sind.

13. Radial-Biegeverfahren nach einem der Ansprüche 11 oder 12,
**dadurch gekennzeichnet,**
**dass** freie Enden der Greiferbacken (74, 76) radial nach innen weisen und das radiale Bewegen in Schritt d) radial auswärts erfolgt und das radiale Bewegen in Schritt h) radial einwärts.

14. Computerprogrammprodukt, umfassend maschinenlesbare Steueranweisungen, die, wenn in eine Steuerung (26) einer Radial-Biegeeinrichtung (38) nach einem der Ansprüche 1 bis 6 geladen, die Radial-Biegeeinrichtung (38) veranlassen, das Radial-Biegeverfahren nach einem der Ansprüche 11 bis 13 durchzuführen.

## Claims

1. Radial bending device (38) for use in the manufacture of a component (14) of an electric machine provided with coils and for bending in a radial direction wire ends (20) of a wire end group (94) which axially protrude from an annular housing (12) of the component (14), the wire end group (94) comprising at least three wire ends (20, 20a - 20d) arranged one after the other in a radial direction, the device comprising:
a radially movable gripper (44) designed for gripping at least one of the wire ends (20) and for bending the at least one wire end (20) in the radial direction,
**characterized in that**
the gripper (44) has a first contact surface (102) for at least one wire end (20), which first contact surface points in a first radial direction, and a second contact surface (106) for at least one wire end (20), which second contact surface points in the opposite second radial direction, and **in that**
an abutment element (46) extending longitudinally or flatly with a first and a second side in the circumferential direction is provided for axial insertion between two radially adjacent wire ends (20) of the wire end group (94) in order to divide the wire end group (94) into several parts (122, 124),
wherein in a first radial movement range of the gripper (44), the first side of the abutment element (46) is formed as an abutment for the first contact surface (102) in order to sandwich at least one wire end (20) of first part (122) of the wire end group (94) located on the first side between the abutment element (46) and the first contact surface (102) and in a second radial movement range of the gripper (44), the second side of the abutment element (46) is formed as an abutment for the second contact surface (106) in order to sandwich at least one wire end (20) of the second part (124) of the wire end group (94) located on the second side between the abutment element (46) and the second contact surface (106).

2. Radial bending device (38) according to claim 1,
**characterized in that**
the gripper (44) has a first receiving space (104) for the at least one wire end (20) of the first part (122) of the wire end group (94), wherein the first receiving space (104) is bounded by the first contact surface (102), and a second receiving space (108), radially spaced from the first receiving space (104), for the at least one wire end (20) of the second part (124) of the wire end group (94), wherein the second receiving space (108) is bounded by the second contact surface (106).

3. Radial bending device (38) according to any of the preceding claims,
**characterized in that**
the gripper (44) is provided with a first and a second gripper jaw (74, 76) which are movable relative to each other and of which at least one gripper jaw (74, 76) has a protrusion (110, 112) which protrudes towards the other gripper jaw (74, 76) and on which at least a subsection of at least one of the contact surfaces (102, 106) is formed.

4. Radial bending device (38) according to claim 2 and according to claim 3,
**characterized in that**
the receiving spaces (104, 108) are bounded on the sides pointing to the circumferential direction by radially extending clamping surfaces (118, 120) of the gripper jaws (74, 76) and/or are bounded on the opposite side of the respective contact surface (102, 106) by at least one tooth protrusion (114, 116) which is smaller than the protrusion (110, 112).

5. Radial bending device (38) according to any of the preceding claims,
**characterized in that**
5.1 the first contact surface (102) and the second contact surface (106) are axially spaced from each other;
5.2 the first contact surface (102) is formed on a first protrusion (110) protruding from at least one gripper jaw (74, 76) of the gripper (44) and the second contact surface (106) is formed on a second protrusion (112) protruding from the at least one gripper jaw (74, 76) of the gripper (44), preferably in such a way that the first and the second protrusion (110, 112) are axially and/or radially spaced from each other.

6. Radial bending device (38) according to any of the preceding claims,
**characterized in that**
the abutment element (46):
6.1 is designed as a part or segment of a sleeve which extends in the circumferential direction;
6.2 is designed as a sheet metal wall; or
6.3 has at least one recess (126, 128) for free ends of gripper jaws (74, 76) of the gripper (44) to pass through.

7. Radial bending apparatus (22), comprising several circumferentially spaced radial bending devices (38) according to any of the preceding claims in order to process several circumferentially spaced wire end groups (94) at the same time.

8. Wire end shaping apparatus (16) for use in the manufacture of a component (14) of an electric machine provided with coils for shaping wire ends (20) protruding from an annular housing (12) of the component (14), the apparatus comprising a radial bending device (38) according to any of claims 1 to 6 or a radial bending device (22) according to claim 7 and a holder (24) for the component (74), which holder is axially movable relative to the radial bending device (38) or the radial bending device (22) and rotatable relative to the radial bending device (38) or the radial bending device (22) about a central axis (30).

9. Wire end shaping apparatus (16) according to claim 8, comprising a control unit (26) which is configured to control the wire end shaping apparatus (16) for carrying out the steps of the radial bending method according to claim 11.

10. Arrangement (10), comprising a device or apparatus according to any of the preceding claims and a component (14) provided with an annular housing (12) from which wire ends (20) of a wire end group protrude axially, which wire end group (94) comprises at least three wire ends (20, 20a - 20d) arranged one after the other in the radial direction.

11. Radial bending method to be carried out in the course of manufacturing a component (14) of an electrical machine provided with coils, in order to bend in a radial direction wire ends (20) of a wire end group (94) which project axially from an annular housing (12) of the component and have at least three wire ends (20) arranged one after the other in the radial direction, **characterized by**:
a) axially inserting an abutment element (46) which circumferentially extends in an elongated or flat manner between two radially adjacent wire ends (20) of the wire end group (94) in order to divide the wire end groups (94) into several parts (122, 124),
b) sandwiching and aligning at least one wire end (20) of a first part (122) of the wire end groups (94) between one side of the abutment element (46) and a first contact surface (102) of a gripper (44) directed in one radial direction by a corresponding radial movement of the gripper (44) with gripper jaws (74, 76) in a central position (98);
c) clamping the at least one wire end (20) of the first part (122) of the wire end group (94) in a first receiving space (104) bounded by the first contact surface (102) by moving the clamping jaws (74, 76) to a clamping position (100);
d) radially moving the gripper (44) in order to radially bend the at least one wire end (20) of the first part (122) of the wire end group (94) received in the first receiving space (104);
e) radially bending the gripper (44) with gripper jaws (74, 76) in a release position (96) to the other side of the abutment element (46);
f) sandwiching and aligning at least one wire end (20) of a second part (124) of the wire end group (94) between the other side of the abutment element (46) and a second contact surface of the gripper (44) with gripper jaws (74, 76) in the central position;
g) clamping the at least one wire end (20) of the second part (124) of the wire end group (94) in a second receiving space (108) bounded by the second contact surface (106) by moving the clamping jaws (74, 76) to the clamping position (100);
h) radially moving the gripper (44) in order to radially bend the at least one wire end (20) received in the second receiving space (108).

12. Radial bending method according to claim 11,
**characterized in that**
12.1 steps b) through d) are repeated prior to performing step e) for bending other wire ends (20) of the first part (122) of the wire end group (94); and/or
12.2 steps f) through h) for bending other wire ends (20) of the second part (124) of the wire end group (94) are repeated and/or
12.3 the method, at least steps b) through h) thereof, are repeated on other wire end groups (94) of the component (14) until all protruding wire ends (20) are radially shaped accordingly.

13. Radial bending method according to any of claims 11 or 12,
**characterized in that**
free ends of the gripper jaws (74, 76) point radially inwards and the radial movement in step d) takes place radially outwards and the radial movement in step h) radially inwards.

14. Computer program product, comprising machine-readable control instructions which when loaded to control unit (26) of a radial bending device (38) according to any of claims 1 to 6 cause the radial bending device (38) to carry out the radial bending method according to any of claims 11 to 13.

## Revendications

1. Dispositif de pliage radial (38) utilisé dans la fabrication d'un composant (14) d'une machine électrique pourvu de bobines et pour plier dans une direction radiale des extrémités de fils (20) d'un groupe d'extrémités de fils (94) qui font saillie axialement d'un boîtier annulaire (12) du composant (14), le groupe d'extrémités de fils (94) comprenant au moins trois extrémités de fils (20, 20a - 20d) disposées l'une après l'autre dans une direction radiale, le dispositif comprenant :
une pince (44) mobile radialement, conçue pour saisir au moins une des extrémités de fil (20) et pour plier l'au moins une extrémité de fil (20) dans la direction radiale,
**caractérisé en ce que**
la pince (44) présente une première surface de contact (102) pour au moins une extrémité de fil (20), cette première surface de contact étant orientée dans une première direction radiale, et une deuxième surface de contact (106) pour au moins une extrémité de fil (20), cette deuxième surface de contact étant orientée dans la deuxième direction radiale opposée, et **en ce que**
un élément de butée (46) s'étendant longitudinalement ou platement avec un premier et un second côté dans la direction circonférentielle est prévu pour l'insertion axiale entre deux extrémités de fil (20) radialement adjacentes du groupe d'extrémités de fil (94) afin de diviser le groupe d'extrémités de fil (94) en plusieurs parties (122, 124), dans lequel, dans une première plage de mouvement radial de la pince (44), le premier côté de l'élément de butée (46) est formé comme une butée pour la première surface de contact (102) afin de prendre en sandwich au moins une extrémité de fil (20) de la première partie (122) du groupe d'extrémités de fil (94) situé sur le premier côté entre l'élément de butée (46) et la première surface de contact (102) et dans une deuxième plage de mouvement radial de la pince (44), le deuxième côté de l'élément de butée (46) est formé comme une butée pour la première surface de contact (102), le deuxième côté de l'élément de butée (46) est formé comme une butée pour la deuxième surface de contact (106) afin de prendre en sandwich au moins une extrémité de fil (20) de la deuxième partie (124) du groupe d'extrémités de fil (94) situé sur le deuxième côté entre l'élément de butée (46) et la deuxième surface de contact (106).

2. Dispositif de pliage radial (38) selon la revendication 1,
**caractérisé en ce que**
la pince (44) a un premier espace de réception (104) pour au moins une extrémité de fil (20) de la première partie (122) du groupe d'extrémités de fil (94), dans lequel le premier espace de réception (104) est délimité par la première surface de contact (102), et un deuxième espace de réception (108), radialement espacé du premier espace de réception (104), pour au moins une extrémité de fil (20) de la deuxième partie (124) du groupe d'extrémités de fil (94), dans lequel le deuxième espace de réception (108) est délimité par la deuxième surface de contact (106).

3. Dispositif de pliage radial (38) selon l'une quelconque des revendications précédentes, **caractérisé en ce que**
la pince (44) est pourvue d'une première et d'une seconde mâchoire de pince (74, 76) mobiles l'une par rapport à l'autre et dont au moins une mâchoire de pince (74, 76) présente une saillie (110, 112) qui fait saillie vers l'autre mâchoire de pince (74, 76) et sur laquelle est formée au moins une sous-section d'au moins une des surfaces de contact (102, 106).

4. Dispositif de pliage radial (38) selon la revendication 2 et selon la revendication 3, **caractérisé en ce que**
les espaces de réception (104, 108) sont délimités sur les côtés orientés vers la direction circonférentielle par des surfaces de serrage (118, 120) des mâchoires de pince (74, 76) s'étendant radialement et/ou sont délimités sur le côté opposé de la surface de contact respective (102, 106) par au moins une saillie de dent (114, 116) qui est plus petite que la saillie (110, 112).

5. Dispositif de pliage radiale (38) selon l'une quelconque des revendications précédentes, **caractérisé en ce que**
5.1 la première surface de contact (102) et la deuxième surface de contact (106) sont axialement espacées l'une de l'autre;
5.2 la première surface de contact (102) est formée sur une première saillie (110) faisant saillie d'au moins une mâchoire de pince (74, 76) de la pince (44) et la deuxième surface de contact (106) est formée sur une deuxième saillie (112) faisant saillie d'au moins une mâchoire de pince (74, 76) de la pince (44), de préférence de telle sorte que la première et la deuxième saillie (110, 112) sont axialement et/ou radialement espacées l'une de l'autre.

6. Dispositif de pliage radial (38) selon l'une quelconque des revendications précédentes, **caractérisé en ce que**
l'élément de butée (46):
6.1 est conçu comme une partie ou un segment d'un manchon qui s'étend dans la direction circonférentielle;
6.2 est conçu comme une paroi en tôle; ou
6.3 comporte au moins un évidement (126, 128) pour le passage des extrémités libres des mâchoires de pince (74, 76) de la pince (44).

7. Appareil de pliage radial (22) comprenant plusieurs dispositifs de pliage radial (38) espacés circonférentiellement selon l'une quelconque des revendications précédentes afin de traiter simultanément plusieurs groupes d'extrémités de fils (94) espacés circonférentiellement.

8. Appareil de façonnage d'extrémités de fils (16) utilisé dans la fabrication d'un composant (14) d'une machine électrique muni de bobines pour façonner des extrémités de fils (20) dépassant d'un logement annulaire (12) du composant (14), l'appareil comprenant un dispositif de pliage radial (38) selon l'une quelconque des revendications 1 à 6 ou un appareil de pliage radial (22) selon la revendication 7 et un support (24) pour le composant (74), ce support étant mobile axialement par rapport au dispositif de pliage radial (38) ou à l'appareil de pliage radial (22) et rotatif par rapport au dispositif de pliage radial (38) ou à l'appareil de pliage radial (22) autour d'un axe central (30).

9. Appareil de façonnage d'extrémités de fils (16) selon la revendication 8, comprenant une unité de commande (26) configurée pour commander l'appareil de façonnage d'extrémités de fils (16) afin d'exécuter les étapes du procédé de pliage radial selon la revendication 11.

10. Installation (10), comprenant un dispositif ou un appareil selon l'une quelconque des revendications précédentes et un composant (14) pourvu d'un boîtier annulaire (12) duquel dépassent axialement des extrémités de fil (20) d'un groupe d'extrémités de fil, ce groupe d'extrémités de fil (94) comprenant au moins trois extrémités de fil (20, 20a - 20d) disposées l'une après l'autre dans la direction radiale.

11. Procédé de pliage radial à mettre en oeuvre au cours de la fabrication d'un composant (14) d'une machine électrique pourvu de bobines, afin de plier dans une direction radiale des extrémités de fils (20) d'un groupe d'extrémités de fils (94) qui font saillie axialement à partir d'un boîtier annulaire (12) du composant et ont au moins trois extrémités de fils (20) disposées l'une après l'autre dans la direction radiale, **caractérisé par** les étapes suivantes:
a) insérer axialement un élément de butée (46) qui s'étend circonférentiellement de manière allongée ou plate entre deux extrémités de fil (20) radialement adjacentes du groupe d'extrémités de fil (94) afin de diviser les groupes d'extrémités de fil (94) en plusieurs parties (122, 124),
b) prendre en sandwich et aligner au moins une extrémité de fil (20) d'une première partie (122) des groupes d'extrémités de fil (94) entre un côté de l'élément de butée (46) et une première surface de contact (102) d'une pince (44) dirigée dans une direction radiale par un mouvement radial correspondant de la pince (44) avec des mâchoires de pince (74, 76) dans une position centrale (98);
c) serrer au moins une extrémité de fil (20) de la première partie (122) du groupe d'extrémités de fil (94) dans un premier espace de réception (104) délimité par la première surface de contact (102) en déplaçant les mâchoires de pince (74, 76) dans une position de serrage (100);
d) déplacer radialement la pince (44) afin de plier radialement l'au moins une extrémité de fil (20) de la première partie (122) du groupe d'extrémités de fil (94) reçu dans le premier espace de réception (104);
e) plier radialement la pince (44) avec les mâchoires de pince (74, 76) dans une position de libération (96) de l'autre côté de l'élément de butée (46);
f) prendre en sandwich et aligner au moins une extrémité de fil (20) d'une deuxième partie (124) du groupe d'extrémités de fil (94) entre l'autre côté de l'élément de butée (46) et une deuxième surface de contact de la pince (44) avec les mâchoires de pince (74, 76) dans la position centrale;
g) serrer au moins une extrémité de fil (20) de la deuxième partie (124) du groupe d'extrémités de fil (94) dans un deuxième espace de réception (108) délimité par la deuxième surface de contact (106) en déplaçant les mâchoires de pince (74, 76) vers la position de serrage (100);
h) déplacer radialement la pince (44) afin de plier radialement l'au moins une extrémité de fil (20) reçue dans le deuxième espace de réception (108).

12. Procédé de pliage radial selon la revendication 11,
**caractérisé en ce que**
12.1 les étapes b) à d) sont répétées avant l'exécution de l'étape e) pour plier d'autres extrémités de fil (20) de la première partie (122) du groupe d'extrémités de fil (94); et/ou
12.2 les étapes f) à h) pour le pliage d'autres extrémités de fils (20) de la deuxième partie (124) du groupe d'extrémités de fils (94) sont répétées et/ou
12.3 le procédé, au moins les étapes b) à h), est répété sur d'autres groupes d'extrémités de fils (94) du composant (14) jusqu'à ce que toutes les extrémités de fils en saillie (20) soient façonnées radialement en conséquence.

13. Procédé de pliage radial selon l'une des revendications 11 ou 12,
**caractérisé en ce que**
les extrémités libres des mâchoires de pince (74, 76) sont orientées radialement vers l'intérieur et le mouvement radial de l'étape d) a lieu radialement vers l'extérieur et le mouvement radial de l'étape h) radialement vers l'intérieur.

14. Produit de programme informatique comprenant des instructions de commande lisibles par machine qui, lorsqu'elles sont chargées dans l'unité de commande (26) d'un dispositif de pliage radial (38) selon l'une quelconque des revendications 1 à 6, amènent le dispositif de cintrage radial (38) à exécuter la méthode de cintrage radial selon l'une quelconque des revendications 11 à 13.
